# EUROPÄISCHE PATENTANMELDUNG

(11) **EP 4 506 189 A1**
(43) Veröffentlichungstag der Anmeldung: **12.02.2025**
(21) Anmeldenummer: 23190978.9
(22) Anmeldetag: 11.08.2023
(51) Int. Cl.: B60C 23/04

(54) **REIFENDRUCKÜBERWACHUNG**

(71) Anmelder: Schmitz Cargobull AG, 48341 Altenberge (DE)
(72) Erfinder: Vens, Rainer, 48653 Coesfeld (DE)
(74) Vertreter: Cohausz & Florack

(57) **Zusammenfassung**

Es werden Verfahren und Vorrichtungen zur Reifendrucküberwachung vorgeschlagen.

## Beschreibung

### Gebiet

Die Erfindung betrifft Verfahren und Vorrichtungen zur Reifendrucküberwachung, insbesondere eines Reifens eines Fahrzeuges, insbesondere eines Nutzfahrzeuges, insbesondere eines Straßennutzfahrzeuges.

### Hintergrund

Heutzutage werden im privaten und gewerblichen Straßenverkehr fast ausschließlich bereifte Fahrzeuge betrieben, deren Räder mit gasgefüllten Reifen ausgestattet sind. Für die Funktionsfähigkeit dieser Räder ist ein ausreichender, jedoch nicht zu hoher Reifendruck notwendig. Ein zu niedriger Reifendruck kann beispielsweise den Rollwiderstand des Reifens und damit Verschleiß und Fahrkosten erhöhen. Ein zu hoher Reifendruck hingegen kann zu Beschädigungen des Reifens führen und damit zu Fahrtausfällen.

Eine manuelle Überwachung des Reifendrucks durch die Nutzer des jeweiligen Fahrzeugs ist aufwändig und wird allzu häufig nicht in der erforderlichen Regelmäßigkeit vollzogen. Die Folge ist ein erhöhtes Risiko eines falschen (insbesondere zu niedrigen aber auch möglicherweise zu hohen) Reifendrucks.

### Zusammenfassung einiger beispielhafter Ausführungsformen der Erfindung

Die Erfindung befasst sich unter anderem damit, eine Reifendrucküberwachung mit einer entsprechenden Sensorik bereitzustellen. An oder in einem Rad umfassend einen Reifen und eine Felge (z.B. und ein Ventil) wird hierbei ein jeweiliger Drucksensor verbaut, der den Druck des Gases im Reifen erfasst. Vorteilhaferweise kann eine teilweise automatisierte, sensorbasierte Reifendrucküberwachung den Nutzer seiner Pflicht entheben, den Reifendruck manuell zu erfassen. Damit wird das Risiko menschlichen Versagens in Form lückenhafter Reifendruckkontrollen reduziert. Die Fahrt wird sicherer und günstiger.

Eine der Herausforderungen sensorbasierter Reifendrucküberwachung ist die Bereitstellung einer verlässlichen Signalübertragung zwischen einem Reifendrucksensor und einem Empfänger. Oft eignet sich eine drahtlose Kommunikation am besten. Doch zeichnet sich die Umgebung eines Fahrzeuges durch eine Vielzahl von für drahtlosen Übertragungsarten (beispielsweise optische und/oder (elektro-)magnetische Strahlung) schwer durchdringlichen und/oder reflektiven Elementen aus (z.B. aus Metallwerkstoffen). Darüber hinaus befindet sich der Reifendrucksensor aufgrund der Befestigung am Rad typischerweise in dauerhafter Rotation, während das Fahrzeug in Bewegung ist, was die Übertragung von Signalen des Reifendrucksensors weiterhin erschwert.

Eine Aufgabe der vorliegenden Erfindung ist es daher, Verfahren und Vorrichtungen zur Reifendrucküberwachung bereitzustellen, welche eine besonders hohe Zuverlässigkeit der Signalübertragung zwischen einem Reifendrucksensor und einem Empfänger erreichen. Insbesondere soll diese Aufgabe mit der bereits am Fahrzeug existierenden Reifendrucksensorik gelöst werden.

Gemäß einem ersten Aspekt der Erfindung wird ein Verfahren zur Reifendrucküberwachung eines Fahrzeugs, insbesondere Nutzfahrzeugs, ausgeführt durch eine Reifendrucksensoranordnung, vorgeschlagen, umfassend
- Erfassen eines Innendrucks eines Reifens eines Rads,
- Bestimmen eines Sendezeitpunkts zum Senden eines Kommunikationssignals zumindest teilweise abhängig von einer Drehwinkelindikation, wobei das Kommunikationssignal eine Reifendruckindikation umfasst, wobei die Reifendruckindikation zumindest den erfassten Innendruck des Reifens repräsentiert, und wobei die Drehwinkelindikation zumindest eine Drehwinkelposition des Rades repräsentiert, und
- Senden des Kommunikationssignals zu dem bestimmten Sendezeitpunkt.

Ein Fahrzeug kann vorliegend insbesondere ein bereiftes Fahrzeug sein. Beispielsweise kann das Fahrzeug zumindest 1, 2, 3, 4, 6, 8, 10, 12 oder mehr Räder mit jeweiligem Reifen aufweisen. Das offenbarte Fahrzeug kann beispielsweise ein Fahrzeug für den privaten Straßenverkehr, insbesondere ein motorisiertes Zwei- oder Dreirad (z.B. Motorrad, Moped, Roller) oder ein Personenkraftwagen (PKW) sein.

Das offenbarte Fahrzeug kann insbesondere ein Nutzfahrzeug sein, zum Beispiel ein Lastkraftwagen, ein Anhänger oder ein Sattelauflieger. Nutzfahrzeuge sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Nutzfahrzeugaufbauten auf, welche der Aufnahme der zu transportierenden Güter in einem Innenraum, insbesondere einem Laderaum, dienen. So sind beispielsweise Kofferaufbauten mit festen Seitenwänden und einem festen Dach bekannt, welche den Innenraum umschließen. Alternativ oder zusätzlich kann der Anhänger auch eine Außenwand aufweisen, welche zumindest teilweise eine Plane umfasst (Planenaufbauten).

Das offenbarte Verfahren umfasst das Erfassen eines Innendrucks eines Reifens eines Rads. Das Rad ist hierbei insbesondere ein Rad des Fahrzeugs. Das Rad kann an einer Radachse des Fahrzeugs angeordnet sein, welche beispielsweise mit einer Rotationsachse des Rades zusammenfallen kann. Das Rad umfasst insbesondere eine Felge und einen Reifen. Der Reifen kann auf die Felge aufgespannt sein. Ein Innenraum des Rads, welcher insbesondere von dem Reifen und der Felge begrenzt sein kann, ist mit einem Gas gefüllt, insbesondere Luft. Der Innenraum ist beispielsweise durch ein Ventil des Rads mit dem Gas befüllbar und/oder entleerbar. In dem Innenraum des Reifens besteht ein Innendruck. Der Innendruck kann beispielsweise für PKW im Bereich 2-3 bar liegen. Bei Nutzfahrzeugen können höhere Innendrücke im Bereich 8-10 bar vorliegen.

Ein Rad ist also insbesondere ein am Fahrzeug montiertes Rad. Das Rad kann eine (insbesondere feste und/oder unveränderliche) Radposition am Fahrzeug haben. Eine Radposition kann beispielsweise durch die Fahrzeugseite (beispielsweise in Vorwärtsfahrtrichtung links oder rechts) bestimmt sein. Eine Radposition kann alternativ oder zusätzlich entlang der Vorwärtsfahrtrichtung (beispielsweise in Vorwärtsfahrtrichtung hinten oder vorne, an Position 1 von N, wobei 1 der in Vorwärtsfahrtrichtung vordersten Position und N der in Vorwärtsfahrtrichtung hinteren Position entspricht) definiert sein. Eine Radposition kann alternativ oder zusätzlich in seiner Position entlang einer Radachse und/oder Rotationsachse des Rads und/oder senkrecht zur Vorwärtsfahrtrichtung definiert sein, insbesondere im Falle von mehreren Rädern, welche direkt nebeneinander auf der Radachse angeordnet sind (bspw. im Falle von Zwillingsrädern). Eine beispielhafte Radposition könnte beispielsweise durch die obigen drei Positionsangaben als (links, Position 1, zweites Rad von außen) definiert sein.

Der Innendruck eines Reifens eines Rads des Fahrzeugs kann insbesondere mittels eines Drucksensors einer Reifendrucksensoranordnung erfasst werden. Die Reifendrucksensoranordnung kann insbesondere im Bereich eines Rads des Fahrzeugs angeordnet sein, beispielswiese im oder am Reifen eines Rads und/oder an einer Felge des Rads und/oder einem Ventil des Rads. Die Reifendrucksensoranordnung kann zumindest einen Drucksensor und Mittel zur Ausführung des Verfahrens nach dem ersten Aspekt umfassen.

Der Innendruck kann kontinuierlich und/oder periodisch, insbesondere in vordefinierten Intervallen, erfasst werden. Beispielsweise kann der Innendruck in zeitlichen Abständen von zumindest 10s, 30s, 1min, 2min, 5min, 10min, 15min, 20min, 30min, 40min, 50min, 1h, 2h, 3h, 4h, 5h, 10h, 12h, 1d oder länger bestimmt werden. Beispielsweise kann der zeitlichen Abstand auch höchstens 10s, 30s, 1min, 2min, 5min, 10min, 15min, 20min, 30min, 40min, 50min, 1h, 2h, 3h, 4h, 5h, 10h, 12h, 1d oder weniger betragen.

Das Verfahren betrifft ferner das Bestimmen eines Sendezeitpunkts für ein Kommunikationssignal.

Das Kommunikationssignal umfasst eine Reifendruckindikation. Die Reifendruckindikation repräsentiert zumindest den erfassten Innendruck des Reifens.

Wenn hier und im Folgenden eine Indikation (hier die Reifendruckindikation) eine Information repräsentiert (hier den erfassten Innendruck), ist damit insbesondere gemeint, dass die Informationen aus der Indikation ableitbar sind. Die Indikation kann beispielsweise ein Informationselement sein, beispielsweise eine Abfolge von Bits, welche mit einer geeigneten Auswertungsmethode in die Information umgewandelt werden kann. Die Umwandlung der Indikation in die Information kann weitere Angaben benötigen. Beispielsweise kann eine Reifendruckindikation einem Index zu einer Tabelle mit Innendruckwerten entsprechen. Es ist aber auch möglich, dass aus der Indikation allein, ohne Zuhilfenahme weiterer Angaben, die Information abgeleitet werden kann. Beispielsweise kann die Reifendruckindikation einem Fließkommawert entsprechen, welcher in dem Kommunikationssignal enthalten ist und der den Reifeninnendruck angibt.

Die Reifendruckindikation kann beispielsweise den (insbesondere zum Zeitpunkt der Messung aktuellen) erfassten Innendruck des Reifens repräsentieren. Auch möglich ist es, dass die Reifendruckindikation einen aus dem erfassten Innendruck abgeleiteten Wert repräsentiert. Beispielsweise kann die Reifendruckindikation einen Mittelwert, Median, Maximalwert, Minimalwert über eine Mehrzahl von erfassten Innendrücken und/oder Kombinationen hieraus repräsentieren. Die Mehrzahl von erfassten Innendrücken kann beispielsweise 2, 3, 4, 5, 10, 20 oder mehr erfasste Innendrücke umfassen. Die Mehrzahl von erfassten Innendrücken kann beispielsweise die zuletzt erfassten Innendrücke, beispielsweise welche nach dem letzten Senden erfasst wurden, umfassen.

Der Sendezeitpunkt entspricht beispielsweise einer Zeit, zu der ein Senden eines Kommunikationssignals initiiert und/oder begonnen wird. Auch kann der Sendezeitpunkt einer Zeit entsprechen, zu der das Senden beendet wird und/oder einen Zeitpunkt während des Sendens des Kommunikationssignals, beispielsweise die zeitliche Mitte einer Zeitspanne, während derer gesendet wird.

Der Sendezeitpunkt wird abhängig von einer Drehwinkelindikation bestimmt.

Die Drehwinkelindikation repräsentiert zumindest eine Drehwinkelposition des Rads. Die Drehwinkelposition des Rads kann beispielsweise verstanden werden als eine Winkelstellung des Rads um die Radachse, an welcher das Rad gelagert ist. Beispielsweise kann jeder Winkelstellung des Rads eine Gradzahl zwischen 0° und 360° zugeordnet werden. Die Drehwinkelindikation ist in diesem Falle repräsentativ für die Gradzahl der momentanen Drehwinkelposition.

Dadurch, dass der Sendezeitpunkt zumindest teilweise abhängig von der Drehwinkelindikation bestimmt wird, kann eine Drehwinkelposition für das Senden bestimmt werden. Es wurde erkannt, dass die Güte der Übertragung (beispielsweise Erfolgswahrscheinlichkeit der Übertragung und/oder die Wahrscheinlichkeit eines vollständigen Empfangs des gesendeten Kommunikationssignals) zwischen einer Reifendrucksensoranordnung und einem Empfänger abhängig ist von der Drehwinkelposition des Rads zum Zeitpunkt des Sendens. Durch Auswahl des Sendezeitpunkts (und damit des Sendedrehwinkels) kann die Übertragungsgüte gesteigert werden.

Die Drehwinkelindikation repräsentiert insbesondere die momentane Drehwinkelposition zu einem gegebenen Zeitpunkt.

Die Drehwinkelindikation erlaubt eine Ableitung der Drehwinkelposition. Beispielsweise kann die Drehwinkelindikation einen Drehwinkelwert, welcher der Drehwinkelposition entspricht und kein weiteres Ableiten erfordert, umfassen. Die Drehwinkelindikation kann alternativ und/oder zusätzlich ein Informationselement umfassen, aus welcher die Drehwinkelposition abgeleitet werden kann, beispielsweise unter Zuhilfenahme weiterer Angaben (z.B. einer Tabelle und/oder eines physikalischen Modells des Reifens und/oder eines für diese Ableitung trainierten Modells des maschinellen Lernens).

Eine Drehwinkelindikation kann beispielsweise zusätzlich und/oder alternativ einen Zeitwert umfassen. Beispielsweise kann die Drehwinkelindikation eine Zeitspanne angeben, die seit dem Durchlaufen einer vordefinierten Drehwinkelposition verstrichen ist. Die vordefinierte Drehwinkelposition kann beispielsweise einer obersten und/oder untersten Position der Reifendrucksensoranordnung über eine Radrotation hinweg entsprechen.

Die Drehwinkelindikation kann beispielsweise zusätzlich und/oder alternativ eine Beschleunigung (des Rads und/oder der Reifendrucksensoranordnung) repräsentieren. Es wurde erkannt, dass aus einer Beschleunigung die Drehwinkelposition des Rads abgeleitet werden kann. Beispielsweise kann die Beschleunigung eine Beschleunigung sein, welche auf die Reifendrucksensoranordnung wirkt und/oder von der Reifendrucksensoranordnung erfasst wird.

Das Bestimmen des Sendezeitpunkts kann beispielsweise allein auf der Drehwinkelindikation oder auf der Drehwinkelindikation in Kombination mit weiteren Faktoren beruhen.

Beispielsweise kann eine Auslösedrehwinkelposition vordefiniert sein. Sobald die von der Drehwinkelindikation repräsentierte (z.B. momentane) Drehwinkelposition die Auslösedrehwinkelposition erreicht und/oder sich der Auslösedrehwinkelposition annähert (beispielsweise bis auf eine vordefinierten maximale Abweichung, beispielsweise eine Abweichung von höchstens 1°, 5° oder 10 °) und/oder die Auslösedrehwinkelposition überschreitet, kann der Sendezeitpunkt bestimmt werden. Beispielsweise kann der Sendezeitpunkt als der Zeitpunkt bestimmt werden, in dem die Auslösedrehwinkelposition erreicht und/oder überschritten ist.

Beispielsweise kann das Bestimmen des Sendezeitpunkts neben der Drehwinkelindikation von einer Zeitinformation abhängen. Beispielsweise kann zu dem Zeitpunkt des Erreichens, Annäherns und/oder Überschreitens der Auslösedrehwinkelposition eine vordefinierte Dauer (beispielsweise Wartezeit) hinzuaddiert werden, um den Sendezeitpunkt zu erhalten.

Beispielsweise kann das Bestimmen des Sendezeitpunkts neben der Drehwinkelindikation von einer Drehgeschwindigkeit (des Rads und/oder der Reifendrucksensoranordnung) abhängen. Beispielsweise kann abhängig von der Drehgeschwindigkeit eine Dauer (beispielsweise Wartezeit) zwischen dem Erreichen der Auslösedrehwinkelposition und dem Sendezeitpunkt gewählt werden. Hierdurch kann beispielsweise eine (z.B. unvermeidliche) Verzögerung zwischen der Erfassung und Auswertung der Drehwinkelindikation und einem (z.B. frühestmöglichen) Sendezeitpunkt ausgeglichen werden, ohne den Sendedrehwinkel geschwindigkeitsabhängig werden zu lassen. Beispielsweise kann auf diese Weise ein (zumindest annähernd) konstanter Drehwinkelversatz zwischen (z.B. momentaner) Drehwinkelposition (z.B. Drehwinkelposition während der Bestimmung des Sendezeitpunkts) und Sendedrehwinkel (z.B. Drehwinkelposition während des Sendens) erreicht werden.

Das Verfahren umfasst ferner das Senden des Kommunikationssignals zum bestimmten Sendezeitpunkt.

Das Kommunikationssignal ist insbesondere ein drahtloses Kommunikationssignal, beispielsweise nach einem drahtlosen Kommunikationsstandard wie ein Bluetooth (https://www.bluetooth.com), Zigbee, einem anderen Kommunikationsstandard, einer nicht standardisierten, beispielsweise proprietären Funkmethode, und/oder Kombinationen hieraus. Das Kommunikationssignal kann auf eine Trägerfrequenz aufmoduliert sein, beispielsweise einer Trägerfrequenz von einigen hundert MHz, beispielsweise 200 - 800 MHz, beispielsweise 433 MHz oder auch höhere Frequenzen von 2,4 bis 2,4835 GHz (z.B. Bluetooth).

Das Kommunikationssignal kann eine Gesamtsendung als ein einziges, zusammenhängendes Signal sein, welches in einem, also ohne eine Sendepause, übertragen wird. Auch kann das Kommunikationssignal in mehrere Teilsendungen unterteilt sein. Die Teilsendungen können in einem zeitlichen Abstand zueinander gesendet werden. Das Kommunikationssignal kann beispielsweise ein oder mehrere Datenpakete umfassen. beispielsweise mehrere voneinander separate Datenpakete, welche jeweils unabhängig von den übrigen Datenpaketen empfangen werden können. Eine Gesamtsendung kann mehrere Datenpakete umfassen. Auch können Teilsendungen jeweils zumindest ein Datenpaket umfassen. Eine Gesamtheit von Datenpaketen kann auf mehrere Teilsendungen aufgeteilt werden, sodass zumindest zwei Datenpakete in voneinander verschiedenen Teilsendungen übertragen werden.

Das Kommunikationssignal kann als Broadcast-Signal gesendet werden, beispielsweise ohne spezifischen Empfänger und ohne Notwendigkeit einer Rückmeldung seitens des Empfängers.

Das Kommunikationssignal kann ein Signal einer unidirektionalen oder bidirektionalen Kommunikation sein.

Für das Kommunikationssignal kann eine Sendedauer bestimmt sein, welche der Zeitspanne entspricht, welche zwischen dem Beginn und dem Ende des Sendens verstreicht. Auch kann für das Kommunikationssignal ein Sendezeitpunkt bestimmt sein, beispielsweise kann dieser den Beginn des Sendens des Kommunikationssignals, die Vollendung des Sendens oder auch einen Zeitpunkt während der Sendedauer (beispielsweise die zeitliche Mitte der Sendedauer) bezeichnen.

Beispielsweise kann das Senden des Kommunikationssignals zum Sendezeitpunkt beginnen. Auch kann das Senden zum Sendezeitpunkt (z.B. gerade) abgeschlossen sein. Das Senden kann sich über eine Sendedauer erstrecken. Die Sendedauer kann beispielsweise den Sendezeitpunkt einschließen, beispielsweise derart, dass der Sendezeitpunkt zumindest im Wesentlichen (z.B. um bis zu 5%, 10%, 15%, 20% oder 30% der Sendedauer abweichend) zeitlich mittig in der Sendedauer liegt.

Gemäß einem Ausführungsbeispiel des ersten Aspekts umfasst das Verfahren ferner das Erfassen zumindest einer Beschleunigung.

Die Beschleunigung ist insbesondere eine Beschleunigung der Reifendrucksensoranordnung. Alternativ oder zusätzlich ist die Beschleunigung eine Beschleunigung des Rads. Die Beschleunigung kann insbesondere von einem Beschleunigungssensor der Reifendrucksensoranordnung erfasst werden.

Die Beschleunigung wird insbesondere entlang einer Erfassungsachse erfasst. Die Erfassungsachse ist insbesondere relativ zu der Reifendrucksensoranordnung fixiert. Die Erfassungsachse kann beispielsweise senkrecht zur Rotationsachse und/oder zur Radachse des Rads ausgerichtet sein.

Die Beschleunigung kann kontinuierlich und/oder in vordefinierten zeitlichen Abständen erfasst werden. Beispielsweise kann die Beschleunigung in zeitlichen Abständen von zumindest 100µs, 200µs, 500µs, 1ms, 2ms, 5ms, 10ms, 50ms, 100ms, 200ms, 500ms, 1s, 2s, 5s, 10s, 30s, 1min, 2min, 5min, 10min, 20min, 30min oder 1h erfasst werden. Beispielsweise kann die Beschleunigung in zeitlichen Abständen von höchstens 100µs, 200µs, 500µs, 1ms, 2ms, 5ms, 10ms, 50ms, 100ms, 200ms, 500ms, 1s, 2s, 5s, 10s, 30s, 1min, 2min, 5min, 10min, 20min, 30min oder 1h erfasst werden.

Die zumindest eine erfasste Beschleunigung kann einen momentanen Wert der Beschleunigung entlang zumindest einer Erfassungsachse umfassen. Möglich ist ebenfalls eine Zusammenfassung mehrerer erfasster Beschleunigungswerte, beispielsweise in Form eines Mittelwerts, Medians, maximalen Werts, minimalen Werts und/oder Kombinationen hieraus. Beispielsweise kann die Beschleunigung zumindest 2, 3, 4, 5 oder mehr voneinander unabhängig erfasste Beschleunigungswerte zusammenfassen.

Mittels der Beschleunigung kann unter anderem die (z.B. momentane) Drehrichtung des Rads und/oder der Reifendrucksensoranordnung, die (z.B. momentane) Drehgeschwindigkeit des Rads und/oder der Reifendrucksensoranordnung sowie die (z.B. momentane) Drehwinkelposition des Rads und/oder der Reifendrucksensoranordnung erfasst werden.

Typischerweise umfasst die Beschleunigung eine Überlagerung der (insbesondere konstanten) Erdbeschleunigung und einer Zentrifugalbeschleunigung durch die Radrotation, insbesondere wenn die Erfassungsachse, in welcher der Beschleunigungssensor eine Beschleunigung erfasst, im Wesentlichen senkrecht zur Rotationsachse des Rads ausgerichtet ist. Je nach Ausrichtung der Erfassungsachse, in welcher der Beschleunigungssensor eine Beschleunigung erfasst, können auch beispielsweise Beschleunigungen entlang der Rotationsachse des Rads detektiert werden. Eine Beschleunigung kann ebenfalls Hinweise auf mechanische Interaktionen des Rads und/oder des Reifens mit seiner Umgebung umfassen. Beispielsweise kann, insbesondere bei geeigneter Anordnung der Reifendrucksensoranordnung, welche den Beschleunigungssensor umfasst (beispielsweise am Reifen selbst) ein Bodenkontakt eines Bereichs des Rads und/oder Reifens, in welchem die Reifendrucksensoranordnung angeordnet ist, basierend auf der erfassten Beschleunigung detektiert werden.

Gemäß einem Ausführungsbeispiel des ersten Aspekts werden mehrere Beschleunigungen in zumindest zwei oder drei verschiedenen Erfassungsachsen erfasst.

Die zumindest zwei oder drei verschiedenen Erfassungsachsen können beispielsweise zumindest im Wesentlichen senkrecht zueinander ausgerichtet sein. Beispielsweise kann eine der zumindest zwei und/oder zwei der zumindest zwei oder drei Erfassungsachsen im Wesentlichen senkrecht zur Rotationsachse des Rads ausgerichtet sein. Die Reifendrucksensoranordnung kann in hierfür geeigneter Weise an dem Rad angeordnet sein.

Wenn zwei Achsen (beispielsweise Erfassungsachse zu Rotationsachse oder zu Radachse) zueinander im Wesentlichen senkrecht ausgerichtet ist, kann hiermit insbesondere gemeint sein, dass zwischen ihnen ein Winkel eingeschlossen ist, welcher von 90° um höchstens 1°, 2°, 5°, 10° oder 15° abweicht.

Gemäß einem Ausführungsbeispiel des ersten Aspekts basiert die Drehwinkelindikation auf der zumindest einen erfassten Beschleunigung.

Aus der zumindest einen erfassten Beschleunigung kann die Drehwinkelposition des Rads und/oder der Reifendrucksensoranordnung bestimmt und/oder abgeleitet werden. Durch Erfassen einer Beschleunigung kann folglich ein Hinweis auf die Drehwinkelposition erhalten werden. Die Drehwinkelindikation, welche in dem Kommunikationssignal gesendet wird, kann damit von dem Erfassen einer Beschleunigung abhängen. Die hierfür verwendete erfasste Beschleunigung kann beispielsweise im Zeitpunkt des Sendens und/oder (beispielsweise kurz) vor dem Senden erfasst werden. Beispielsweise kann zwischen dem Erfassen der Beschleunigung und dem Senden eine Zeit von weniger als 100µs, 200µs, 500µs, 1ms, 2ms, 5ms, 10ms, 50ms, 100ms, 200ms, 500ms, 1s oder 2s liegen. Beispielsweise kann zwischen dem Erfassen der Beschleunigung und dem Senden stets eine vordefinierte Zeitspanne gewartet werden, wobei die vordefinierte Zeitspanne beispielsweise der Zeitdauer entspricht, die das Rad für eine oder mehr (z.B. vollständige) Rotationen benötigt.

Die Drehwinkelindikation kann beispielsweise unter anderem auf der Beschleunigung basieren. Beispielsweise kann die Drehwinkelindikation zusätzlich auf einer Zeitinformation und/oder einer Drehrichtungsinformation und/oder einer Drehgeschwindigkeitsinformation basieren. Alternativ oder zusätzlich kann die Drehwinkelindikation eine Zeitinformation und/oder eine Drehrichtungsinformation und/oder eine Drehgeschwindigkeitsinformation umfassen. Beispielsweise kann die Drehwinkelindikation eine Zeitspanne zwischen dem Erfassen der Beschleunigung und dem Senden umfassen und/oder auf diesem basieren.

Gemäß einem Ausführungsbeispiel des ersten Aspekts
- repräsentiert die Drehwinkelindikation die zumindest eine erfasste Beschleunigung, und/oder
- repräsentiert die Drehwinkelindikation eine zumindest teilweise basierend auf der zumindest einen erfassten Beschleunigung abgeleitete Drehwinkelposition.

Die Drehwinkelindikation kann beispielsweise die zumindest eine erfasste Beschleunigung repräsentieren. In diesem Falle ist es nicht notwendig, dass die Reifendrucksensoranordnung aus der erfassten Beschleunigung eine Drehwinkelposition ableitet und/oder bestimmt. Stattdessen kann die erfasste Beschleunigung selbst genutzt werden (beispielsweise zur Bestimmung eines Sendezeitpunkts). Vorteilhaft hieran ist, dass weniger Verarbeitungsschritte von der Reifendrucksensoranordnung selbst ausgeführt werden müssen. Hierdurch bleibt der Energiebedarf der Reifendrucksensoranordnung gering, und eine maximale Betriebszeit der Reifendrucksensoranordnung kann bei einer gegebenen Menge von verfügbarer Energie (beispielsweise eines elektrischen Energiespeichers der Reifendrucksensoranordnung) besonders lang ausfallen.

Alternativ oder zusätzlich repräsentiert die Drehwinkelindikation eine, zumindest teilweise basierend auf der zumindest einen erfassten Beschleunigung abgeleitete, Drehwinkelposition. In diesem Falle kann die Reifendrucksensoranordnung dazu eingerichtet sein, die Drehrichtungspositionen aus der Beschleunigung zu bestimmen und/oder abzuleiten. Vorteilhaft an dieser Ausgestaltung kann insbesondere sein, dass die abgeleitete und/oder bestimmte Drehwinkelposition in kompakterer Form gesendet werden kann. Während beispielsweise die Beschleunigung in mehreren Erfassungsachsen mit hinreichender Genauigkeit (und damit einhergehender Datenmenge) gesendet werden muss, kann die abgeleitete oder bestimmte Drehwinkelposition als ein einzelner skalarer Wert analysiert werden. Die weitere Verarbeitung kann hierdurch verlässlicher werden.

Gemäß einem Ausführungsbeispiel des ersten Aspekts
- korrespondiert der Sendezeitpunkt mit einem Sendedrehwinkel und/oder einem Sendedrehwinkelbereich.

Der Sendedrehwinkel kann der Drehwinkelposition entsprechen, zu der das Senden beginnt und/oder beendet ist. Auch kann der Sendedrehwinkel einer Drehwinkelposition entsprechen, welche während des Sendens durchlaufen wird.

Da sich das Senden über eine Sendedauer erstrecken kann, lässt sich ein Sendedrehwinkelbereich definieren. Die Drehwinkelposition des Rads durchläuft während des Sendens den Sendedrehwinkelbereich. Der Sendedrehwinkelbereich kann beispielsweise einen Winkelbereich (Winkelabschnitt) von bis zu 1°, 2°, 5°, 10°, 15°, 20° oder 25° aber auch mehr als 30°, 45°, 60°, 75°, 90°, 100°, 120°, 140°, 180°, 270° oder 360° umfassen. Bei hohen Drehgeschwindigkeiten des Rads kann der Sendedrehwinkelbereich besonders hohe Werte (große Drehwinkelabschnitte) annehmen.

Durch Bestimmen des Sendezeitpunkts abhängig von der Drehwinkelindikation kann (zumindest ungefähr) ein Sendedrehwinkel und/oder Sendedrehwinkelbereich bestimmt werden.

Wenn von einem Sendedrehwinkel und/oder Sendedrehwinkelbereich die Rede ist, ist hier, im Vorangehenden und Folgenden stets auch die zu dem Sendedrehwinkel (und/oder Sendedrehwinkelbereich) korrespondierende Drehwinkelposition und/oder Drehwinkelindikation (und/oder deren jeweiliger Wertebereich für einen Sendedrehwinkelbereich) offenbart.

Gemäß einem Ausführungsbeispiel des ersten Aspekts
- basiert das Bestimmen des Sendezeitpunkts auf zumindest einem vordefinierten verbotenen Wertebereich der Drehwinkelposition und/oder der Drehwinkelindikation.

Es wurde erkannt, dass die Übertragungswahrscheinlichkeit/-güte an bestimmten Drehwinkelpositionen geringer ist als an anderen Drehwinkelpositionen. Insbesondere kann für bestimmte Drehwinkelbereiche die Übertragungswahrscheinlichkeit (beispielsweise bei einer gegebenen Sendeleistung) gegen Null tendieren und/oder Null entsprechen und/oder höchstens 5%, 10%, 20%, 30% oder 40% betragen. Derartige Wertebereiche von Drehwinkelpositionen können als verbotene Wertebereiche vordefiniert sein. Verbotene drehwinkelbereiche können beim Bestimmen des Sendezeitpunkts herangezogen werden. Insbesondere kann der Sendezeitpunkt derart gewählt werden, dass der Sendedrehwinkel nicht (und/oder kein und/oder höchstens 5%, 10%, 20% oder 30% der Drehwinkelpositionen des Sendedrehwinkelbereichs) in den verbotenen Wertebereich fällt. Beispielsweise kann um den verbotenen Wertebereich ein Mindestabstand(-sdrehwinkel) vorgesehen sein, der von dem Sendedrehwinkel und/oder von dem Sendedrehwinkelbereich zu dem verbotenen Wertebereich eingehalten wird.

Der verbotene Wertebereich kann sowohl die Drehwinkelpositionen direkt betreffen (beispielsweise in Gradzahlen festgelegte Wertebereiche). Auch können anstatt (oder zusätzlich zu) Werten der Drehwinkelposition Werte einer Drehwinkelindikation herangezogen werden. Die Drehwinkelindikation kann beispielsweise eine erfasste Beschleunigung umfassen. Ein verbotener Wertebereich der Drehwinkelindikation kann beispielsweise einem verbotenen Wertebereich von Beschleunigungswerten entsprechen. Die Wertebereiche von Drehwinkelpositionen einerseits und von Drehwinkelindikationen andererseits können ineinander umgerechnet werden.

Der verbotene Wertebereich (von Drehwinkelpositionen und/oder Drehwinkelindikationen) kann beispielsweise empirisch festgelegt werden, insbesondere durch eine Vermessung der Übertragung eines Kommunikationssignals zwischen einer Reifendrucksensoranordnung und einem Empfänger.

Der verbotene Wertebereich kann beispielsweise modellbasiert festgelegt werden, insbesondere durch eine (z.B. physikalische) Simulation der Übertragung eines Kommunikationssignals zwischen einer Reifendrucksensoranordnung und einem Empfänger.

Der verbotene Wertebereich kann beispielsweise gelernt sein, beispielsweise durch die Reifendrucksensoranordnung und/oder basierend auf einer bidirektionalen Kommunikation und/oder zumindest einer Empfangsbestätigung zu zumindest einem oder mehreren gesendeten Kommunikationssignalen.

Wenn die empfangene Sendeleistung (beispielsweise Leistung, Signal-zu-Rausch Verhältnis (SNR), Received Signal Strength Indicator (RSSI) und/oder Kombinationen hieraus) und/oder die Übertragungswahrscheinlichkeit (sei es empirisch gemessen und/oder modellbasiert errechnet) für eine gegebene Drehwinkelposition und/oder Drehwinkelindikation unterhalb von einem vordefinierten Schwellwert liegt, kann diese/dieser einem verbotenen Wertebereich zugerechnet werden.

Der verbotene und/oder erlaubte Wertebereich ist kann beispielsweise spezifisch für eine Radposition, an der das Rad angeordnet ist, an dem die

Reifendrucksensoranordnung angeordnet ist. Auch kann der verbotene und/oder erlaubte Wertebereich beispielsweise ein jeweiliger gemeinsamer Wertebereich sein, der für zumindest zwei oder mehr oder alle Radpositionen gleich ist.

Es kann (insbesondere für eine Radposition) ein (z.B. einziger) verbotener Wertebereich definiert sein. Auch können (insbesondere für eine Radposition) mehrere, voneinander getrennte (z.B. disjunkte) verbotene Wertebereiche definiert sein.

Die vordefinierten verbotenen Wertebereiche können beispielsweise in der Reifendrucksensoranordnung hinterlegt sein, beispielsweise in die Reifendrucksensoranordnung einprogrammiert sein und/oder von dieser empfangen worden sein und/oder von dieser gelernt sein.

Gemäß einem Ausführungsbeispiel des ersten Aspekts
- basiert das Bestimmen des Sendezeitpunkts auf zumindest einem vordefinierten erlaubten Wertebereich der Drehwinkelposition und/oder der Drehwinkelindikation.

Es wurde erkannt, dass die Übertragungswahrscheinlichkeit/-güte an bestimmten Drehwinkelpositionen höher ist als an anderen Drehwinkelpositionen. Insbesondere kann für bestimmte Drehwinkelbereiche die Übertragungswahrscheinlichkeit (beispielsweise bei einer gegebenen Sendeleistung) gegen 100% (Übertragung gelingt in jedem Fall) tendieren oder zumindest 50%, 60%, 70%, 80%, 90%, 95% oder mehr entsprechen. Derartige Wertebereiche von Drehwinkelpositionen können als erlaubte Wertebereiche vordefiniert sein. Erlaubte Wertebereiche können beim Bestimmen des Sendezeitpunkts herangezogen werden. Insbesondere kann der Sendezeitpunkt derart gewählt werden, dass der Sendedrehwinkel (und/oder alle und/oder zumindest 70%, 80%, 90% oder 95% der Drehwinkel des Sendedrehwinkelbereichs) innerhalb des erlaubten Wertebereichs fällt. Beispielsweise kann um den erlaubten Wertebereich ein Höchstabstand(-sdrehwinkel) vorgesehen sein, um den der Sendedrehwinkel und/oder der Sendedrehwinkelbereich höchstens abweichen darf.

Der erlaubte Wertebereich kann sowohl die Drehwinkelpositionen direkt betreffen (beispielsweise in Gradzahlen festgelegter Wertebereich). Auch können anstatt oder zusätzlich zu Werten der Drehwinkelposition Werte einer Drehwinkelindikation herangezogen werden. Die Drehwinkelindikation kann beispielsweise eine erfasste Beschleunigung umfassen. Ein erlaubter Wertebereich der Drehwinkelindikation kann beispielsweise einem erlaubter Wertebereich von Beschleunigungswerten entsprechen. Die Wertebereiche von Drehwinkelpositionen einerseits und von Drehwinkelindikationen andererseits können ineinander umgerechnet werden.

Der erlaubte Wertebereich (von Drehwinkelpositionen und/oder Drehwinkelindikationen) kann beispielsweise empirisch festgelegt werden, insbesondere durch eine Vermessung der Übertragung eines Kommunikationssignals zwischen einer Reifendrucksensoranordnung und einem Empfänger.

Der erlaubte Wertebereich kann beispielsweise modellbasiert festgelegt werden, insbesondere durch eine (z.B. physikalische) Simulation der Übertragung eines Kommunikationssignals zwischen einer Reifendrucksensoranordnung und einem Empfänger.

Der erlaubte Wertebereich kann beispielsweise gelernt sein, beispielsweise durch die Reifendrucksensoranordnung und/oder basierend auf einer bidirektionalen Kommunikation und/oder zumindest einer Empfangsbestätigung zu zumindest einem oder mehreren gesendeten Kommunikationssignalen.

Wenn die empfangene Sendeleistung (beispielsweise Leistung, Signal-zu-Rausch Verhältnis (SNR), Received Signal Strength Indicator (RSSI) und/oder Kombinationen hieraus) und/oder die Übertragungswahrscheinlichkeit (sei es empirisch gemessen und/oder modellbasiert errechnet) für eine gegebene Drehwinkelposition (und/oder Drehwinkelindikation) oberhalb von einem Schwellwert liegt, kann dieser einem erlaubten Wertebereich zugerechnet werden.

Der erlaubte Wertebereich ist insbesondere spezifisch für eine Radposition, an der das Rad angeordnet ist, an dem die Reifendrucksensoranordnung angeordnet ist.

Es kann (insbesondere für eine Radposition) ein (z.B. einziger) erlaubter Wertebereich definiert sein. Auch können (insbesondere für eine Radposition) mehrere, voneinander getrennte (z.B. disjunkte) erlaubte Wertebereiche definiert sein.

Die vordefinierten erlaubten Wertebereiche können beispielsweise in der Reifendrucksensoranordnung hinterlegt sein, beispielsweise in die Reifendrucksensoranordnung einprogrammiert sein und/oder von dieser empfangen worden sein und/oder von dieser gelernt sein.

Gemäß einem Ausführungsbeispiel des ersten Aspekts
- ist der zumindest eine verbotene Wertebereich und/oder der zumindest eine erlaubte Wertebereich abhängig von einem Signalstärkeprofil.

Ein Signalstärkeprofil ist insbesondere eine Beziehung zwischen einer Signalstärke eines ausgehend von einer Reifendrucksensoranordnung gesendeten und an einem Empfänger (z.B. CTU) empfangenen Kommunikationssignals und einer Drehwinkelposition des Rads, insbesondere zum Zeitpunkt des Sendens des Kommunikationssignals (also dem Sendedrehwinkel). Beispielsweise kann die Signalstärke eine empfangene Leistung, ein Signal-zu-Rausch Verhältnis (SNR), ein Received Signal Strength Indicator (RSSI) und/oder Kombinationen hieraus umfassen. Es wurde erkannt, dass ein Signalstärkeprofil charakteristisch für die Radposition sein kann, an welcher die Reifendrucksensoranordnung angeordnet ist und/oder an der das Rad, an welchem die Reifendrucksensoranordnung angeordnet ist, angeordnet ist.

Ein Signalstärkeprofil kann beispielsweise für eine begrenzte Anzahl von (insbesondere äquidistanter) Drehwinkelpositionen bestimmt sein. Beispielsweise kann ein Signalstärkeprofil für die N Drehwinkelpositionen 0, 360°/N, 2*360°/N, ..., (N-1)*360°/N angelegt werden.

Beispielsweise wird ein Signalstärkeprofil basierend auf zumindest 5, 10, 15, 20, 30, 40, 50, 100, 200, 500, 1000, 2000, 5000 oder 10000 empfangenen Kommunikationssignalen abgeleitet und/oder bestimmt.

Das Signalstärkeprofil kann Nullstellen aufweisen, welche Drehwinkelpositionen und/oder Drehwinkelbereichen entsprechen, an denen (z.B. trotz Sendens) kein Signal an einem Empfänger empfangen wird. Darüber hinaus können in dem Signalstärkeprofil Charakteristika bestimmbar sein, beispielsweise Maxima und/oder Minima (z.B. deren jeweilige Signalstärkewerte und/oder Drehwinkelpositionen), Mittelwert, Median, Standardabweichung, Varianz und/oder Kombinationen hieraus.

Insbesondere kann das Signalstärkeprofil Wertebereiche von Drehwinkelpositionen und/oder Drehwinkelindikationen umfassen, in denen die empfangene Signalstärke entweder oberhalb von einem vordefinierten Schwellwert für eine ausreichende Signalstärke und/oder unterhalb von einem vordefinierten Schwellwert für eine ungenügende Signalstärke liegen. Basierend hierauf können verbotene und erlaubte Wertebereiche für die Signalstärke bestimmt werden. Insbesondere können Nullstellen in dem Signalstärkeprofil einem verbotenen Wertebereich zugeordnet werden.

Beispielsweise kann für erlaubte Wertebereiche eine Mindestgröße, beispielsweise eine Mindestdrehwinkelbereichsgröße (z.B. Mindestdrehwinkelabschnitt) und/oder eine Mindestgröße eines Wertebereichs von Drehwinkelindikationen, festgelegt sein. Der erlaubte Wertebereich kann also eine Mindestgröße aufweisen. Beispielsweise kann der erlaubte Wertebereich einem Drehwinkelbereich von zumindest 5°, 10°, 15°, 20°, 25°, 30°, 35°, 40°, 45° oder mehr (Mindestgröße) entsprechen. Beispielsweise kann die Mindestgröße einem Bruchteil eines maximalen Sendedrehwinkelbereichs (und/oder einem entsprechenden Wertebereich der Drehwinkelindikation) entsprechen, welcher beispielsweise für eine maximal erlaubte Geschwindigkeit des Fahrzeugs definiert ist. Der Bruchteil kann beispielsweise zumindest 20%, 30%, 40%, 50%, 60%, 70%, 80%, 90% oder 100% betragen. Durch Festlegung einer Mindestgröße kann sichergestellt werden, dass der erlaubte Wertebereich die Funktion erfüllen kann, eine erfolgreiche Übertragung zu begünstigen.

Gemäß einem Ausführungsbeispiel des ersten Aspekts,
- entspricht das Signalstärkeprofil einer, insbesondere vordefinierten, Verteilung einer Signalstärke über zumindest einen Teil der Drehwinkelpositionen, wobei die Signalstärke eine Stärke eines von der Reifendrucksensoranordnung übermittelten und von einem Empfänger, insbesondere einer Auswertungseinheit, empfangenen Signals und/oder
- das Signalstärkeprofil abhängig von einer Radposition des Rads ist und/oder
- abhängig von der Drehwinkelposition ist und/oder
- das Signalstärkeprofil empirisch bestimmt ist, insbesondere zumindest teilweise basierend auf der zumindest einen erfassten Beschleunigung und/oder auf einem Drehwinkelmesser, und/oder
- das Signalstärkeprofil modellbasiert, insbesondere basierend auf einer Simulation, bestimmt ist und/oder
- das Signalstärkeprofil auf einem physikalischen Übertragungskanal, insbesondere drahtlosen physikalischen Übertragungskanal, zwischen der Reifendrucksensoranordnung und dem Empfänger basiert.

Das Referenzsignalstärkeprofil kann für eine Radposition vordefiniert sein. Beispielsweise kann für zumindest eine Radposition, eine Untermenge aller Radpositionen oder alle Radpositionen des Fahrzeugs ein Referenzsignalstärkeprofil vordefiniert sein.

Das Referenzsignalstärkeprofil kann beispielsweise auch für eine bestimmte Reifendrucksensoranordnung und/oder eine bestimmte Befestigungsmethode der Reifendrucksensoranordnung am Rad (umfassend Reifen und Felge) vordefiniert sein. Das Referenzsignalstärkeprofil kann beispielsweise empirisch bestimmt sein. Beispielsweise kann ein bestimmtes Fahrzeug und/oder ein bestimmtes Fahrzeugmodell, beispielswiese mit einer vordefinierten Ausstattung, zur Erstellung eines Referenzsignalstärkeprofils (beispielsweise für eine bestimmte Radposition) vermessen werden. Hierfür kann beispielsweise ein jeweiliges Rad des Fahrzeugs (z.B. im Stand und/oder im Fahren) in bekannte Drehwinkelpositionen gedreht werden, zu denen eine jeweilige empfangene Signalstärke an der Vorrichtung bestimmt wird. Beispielsweise können die Drehwinkelpositionen hierbei gezielt angesteuert werden, beispielsweise auf (z.B. diskrete) Drehwinkelpositionen, für welche ein Referenzsignalstärkeprofil angelegt werden soll. Auch kann das jeweilige zu vermessende Rad an nicht näher bestimmte Drehwinkelpositionen gedreht werden (z.B. kontinuierlich, z.B. mit einer konstanten, niedrigen Drehgeschwindigkeit im Bereich 1 U/min), welche erst anschließend durch eine Messung bestimmt werden.

Die jeweilige Drehwinkelposition kann beispielsweise basierend auf dem Beschleunigungssensor der Reifendrucksensoranordnung bestimmt werden. Auch kann das Fahrzeug beispielsweise auf einem Prüfstand mit einem Drehwinkelmesser, insbesondere einem Drehgeber, vermessen werden, sodass der Drehwinkelmesser die Drehwinkelposition des Rads angibt.

Das Referenzsignalstärkeprofil kann zusätzlich oder alternativ modellbasiert bestimmt sein. Beispielsweise kann eine Simulation genutzt werden, um das Referenzsignalstärkeprofil zu bestimmen. Die Simulation kann beispielsweise eine Propagation von elektromagnetischen Wellen auf einer Signalstrecke zwischen der Reifendrucksensoranordnung und der Vorrichtung betreffen. Die Simulation kann beispielsweise Transmission, Absorption, Reflektion, sowie Beugung, Brechung, weitere physikalischen Phänomene und/oder Kombinationen hieraus der von der Reifendrucksensoranordnung gesendeten elektromagnetischen Wellen im Fahrzeug berechnen und so die empfangene Signalstärke bestimmen. Die Simulation kann beispielsweise auf einer Finite Elemente Methode (FEM) basieren.

Das Signalstärkeprofil kann ferner von einer Richtcharakteristik der Reifendrucksensoranordnung abhängen.

Gemäß einem Ausführungsbeispiel des ersten Aspekts,
- ist der zumindest eine verbotene Wertebereich und/oder der zumindest eine erlaubte Wertebereich und/oder der Sendedrehwinkel und/oder der Sendedrehwinkelbereich konstant und/oder wird variiert, insbesondere zufällig, zeitbasiert, um einen vordefinierten Änderungswert und/oder in einem vordefinierten Wertebereich, und/oder
- ist der zumindest eine verbotene Wertebereich und/oder der zumindest eine erlaubte Wertebereich abhängig von einer Radposition des Rads.

Der zumindest eine verbotene Wertebereich und/oder der zumindest eine erlaubte Wertebereich kann konstant sein. Beispielsweise kann der jeweilige Wertebereich für eine Radposition vordefiniert sein und sich anschließend (beispielsweise bis zu einer Neukonfiguration) nicht (z.B. mehr) ändern.

Zusätzlich oder alternativ kann der zumindest eine verbotene und/oder erlaubte Wertebereich (z.B. zeitlich) variiert werden. Beispielsweise kann in der Reifendrucksensoranordnung vorgesehen sein, dass der jeweilige Wertebereich variiert wird, um (z.B. unvorhergesehenen) Änderungen der Übertragungsstrecke zwischen der Reifendrucksensoranordnung und dem Empfänger zu begegnen. Beispielsweise wurde erkannt, dass sich im Laufe der Zeit nach Anordnung der Reifendrucksensoranordnung am Rad deren Position am Rad verändern kann. Auch können Elemente an dem Fahrzeug montiert oder entfernt oder umgeordnet werden (z.B. die Ladung des Fahrzeugs), welche den Übertragungskanal zwischen Reifendrucksensoranordnung und einem Empfänger ändern. Insbesondere kann sich ein für ein Senden geeigneter Wertebereich von Drehwinkelpositionen und/oder Drehwinkelindikation verschieben. Eine Variation der erlaubten und/oder verbotenen Winkelbereiche kann verhindern, dass das Senden sich auf Sendedrehwinkel beschränkt, in denen eine erfolgreiche Übertragung des Kommunikationssignals im Laufe der Zeit unwahrscheinlich geworden ist.

Der (z.B. durch das Bestimmen des Sendezeitpunktes angestrebte) Sendedrehwinkel und/oder Sendedrehwinkelbereich kann über die Zeit konstant gehalten werden. Möglich ist es allerdings auch, den Sendedrehwinkel und/oder Sendedrehwinkelbereich zu variieren. Insbesondere kann der Sendedrehwinkel und/oder Sendedrehwinkelbereich variiert werden, während der erlaubte und/oder verbotene Wertebereich konstant ist. Beispielsweise kann der Sendedrehwinkel und/oder Sendedrehwinkelbereich derart variiert werden, dass stets verbotene Wertebereiche (von Drehwinkelpositionen und/oder Drehwinkelindikationen) vermieden werden und erlaubte Wertebereiche (von Drehwinkelpositionen und/oder Drehwinkelindikationen) für das Senden bevorzugt und/oder ausgewählt werden. Eine Variation des Sendedrehwinkels und/oder Sendedrehwinkelbereichs kann ähnlich zur Änderung des erlaubten/ verbotenen Wertebereichs sicherstellen, dass zumindest einige der Sendungen (Teilsendungen oder Gesamtsendungen) und/oder Datenpakete auch empfangen werden. Der zumindest eine erlaubte Werteberich kann Werte von Drehwinkelpositionen/ Drehwinkelindikationen umfassen, an denen die Übertragung schlechter ist als an anderen Werten des erlaubten Wertebereichs. Eine Variation des Sendedrehwinkels/ Sendedrehwinkelbereichs innerhalb des erlaubten Bereichs umgeht das Risiko, wiederholt zu einem solchen vergleichsweise ungünstigen Sendedrehwinkel/ Sendedrehwinkelbereich zu senden.

Die Variation des Sendedrehwinkels und/oder Sendedrehwinkelbereichs kann beispielsweise durch Variation einer Wartezeit ab Erreichen einer Auslösedrehwinkelposition und/oder Variation der Auslösedrehwinkelposition selbst vorgenommen werden.

Die Variation von sowohl Sendedrehwinkel und/oder Sendedrehwinkelbereich als auch verbotenem und/oder erlaubtem Wertebereich kann beispielsweise zufällig erfolgen. Beispielsweise kann eine Zufallsvariable (z.B. verteilt mit einer uniformen, abgeschnittenen Gauß'schen, dreieckigen Wahrscheinlichkeitsverteilung und/oder Kombinationen hieraus) zur Generierung eines zufälligen (Drehwinkel-)Versatzes genutzt werden. Auch kann die Variation zeitbasiert sein, beispielsweise mit der Betriebszeit der Reifendrucksensoranordnung ab dem Zeitpunkt der Montage am Rad in ansteigender Amplitude (z.B. größere Variationsbreite für länger montierte Reifendrucksensoranordnungen). Auch kann die Variation um einen oder mehrere vordefinierte Änderungswerte vorgenommen werden, beispielsweise um einen von einer begrenzten Menge von (z.B. voneinander verschiedenen) Versatzwerten variiert werden. Auch kann die Variation in einem vordefinierten Wertebereich vorgenommen werden (beispielsweise mit einer der oben genannte Wahrscheinlichkeitsverteilungen), beispielsweise um die Abweichung von den ursprünglich eingestellten Werten in definierten Grenzen zu halten.

Gemäß einem Ausführungsbeispiel des ersten Aspekts
- ist das Bestimmen des Sendezeitpunkts und/oder das Senden abhängig von einer Drehgeschwindigkeit des Rads.

Das Bestimmen des Sendezeitpunkts kann beispielsweise zumindest teilweise auf der Drehgeschwindigkeit des Rads basieren. Beispielsweise kann eine Zeitspanne (z.B. Wartezeit) zwischen dem Erreichen eines Auslösewinkels und dem Sendezeitpunkt mit steigender Drehgeschwindigkeit kleiner gewählt werden.

Beispielsweise kann der Sendezeitpunkt bei hohen Geschwindigkeiten des Fahrzeugs (beispielsweise oberhalb von 50, 60, 70, 80, 90, 100, 120 oder 150 km/h) derart gewählt werden, dass das Senden ungefähr beim Eintreten der momentanen Drehwinkelposition in den erlaubten Wertebereich der Drehwinkelpositionen beginnt. Der Sendedrehwinkel bei Beginn des Sendens kann folglich mit der ersten in (Vorwärts-)Drehrichtung erreichten Drehwinkelposition des erlaubten Wertebereichs zusammenfallen und/oder von diesem maximal 1°, 2°, 3°, 4° oder 5° abweichen. Da der Sendedrehwinkelbereich mit steigenden Geschwindigkeiten wächst, sollte der erlaubte Sendebereich hierbei möglichst gut ausgenutzt werden. Das wird auf diese Weise ermöglicht.

Bei geringeren Geschwindigkeiten des Fahrzeugs kann der Sendedrehwinkel/-bereich innerhalb des erlaubten Wertebereichs variiert werden. Hier kann insbesondere ein Teilbereich des mit dem erlaubten Wertebereichs korrespondierenden Bereichs von Drehwinkelpositionen für das Senden genügen.

Auch kann das Senden und/oder das Bestimmen eines Sendezeitpunkts abhängig von der Drehgeschwindigkeit des Rads sein. Beispielsweise kann das Bestimmen und/oder Senden (z.B. nur) bei Drehgeschwindigkeiten oberhalb einer korrespondierenden Mindestgeschwindigkeit des Fahrzeugs ausgeführt werden. Das Bestimmen und/oder Senden kann beispielsweise unterhalb von der Mindestgeschwindigkeit unterbunden sein. Die Mindestgeschwindigkeit kann beispielsweise zumindest 5, 10, 15, 20, 25, 30 oder 50 km/h betragen. Hierdurch können Interferenzen mit Reifendrucksensoranordnungen von anderen Fahrzeugen, die beispielsweise auf einem Parkplatz in der unmittelbaren Nähe des Fahrzeugs stehen, vermieden werden.

Alternativ oder zusätzlich kann eine Maximalgeschwindigkeit vorgesehen sein, oberhalb derer kein Bestimmen und/oder Senden mehr durchgeführt wird. Die Maximalgeschwindigkeit kann beispielsweise 70, 80, 90, 100, 120 oder 150 km/h betragen. Unter Umständen kann es bei erhöhten Geschwindigkeiten nicht mehr gewährleistet sein, dass das Senden innerhalb des erlaubten Wertebereichs fertiggestellt ist. Die Zeitspanne, innerhalb derer das Rad den erlaubten Wertebereich durchläuft, kann kleiner sein als die Sendedauer.

Gemäß einem Ausführungsbeispiel des ersten Aspekts
- ist das Bestimmen des Sendezeitpunkts und/oder das Senden abhängig von einer Zeitinformation.

Beispielsweise kann einerseits ein Sendezeitpunkt bestimmt werden und zusätzlich das Senden abhängig von einer Zeitinformation sein. Beispielsweise kann die Zeitinformation einen zeitlichen Mindestabstand zwischen zwei Sendungen vorgeben, eine Laufzeit der Reifendrucksensoranordnung seit einem ersten Senden und/oder seit einem Losfahren des Fahrzeugs. Das Senden kann beispielsweise bis zum Erreichen des zeitlichen Mindestabstands unterbunden werden.

Beispielsweise kann das Verfahren den Sendezeitpunkt abhängig von einer Zeitinformation bestimmen. Auf diese Art kann beispielsweise vordefiniert werden, dass der Sendezeitpunkt nicht bestimmt wird, wenn ohnehin aufgrund einer Zeitinformation kein Senden stattfinden würde.

Gemäß einem Ausführungsbeispiel des ersten Aspekts
- ist die Zeitinformation abhängig von einer Drehgeschwindigkeit des Rads und/oder
- entspricht die Zeitinformation einer vordefinierten Verzögerungszeitspanne und/oder
- entspricht die Zeitinformation einem Sendeintervall.

Dadurch, dass die Zeitinformation abhängig von der Drehgeschwindigkeit des Rads ist, kann unter anderem erreicht werden, dass während einer von der Zeitinformation definierten Zeitspanne stets der ungefähr gleiche Drehwinkel durchlaufen wird. Insbesondere kann die Zeitspanne mit steigender Geschwindigkeit (z.B. Drehgeschwindigkeit des Rads und/oder Fahrzeuggeschwindigkeit) reduziert werden.

Die Zeitinformation kann eine Verzögerungszeitspanne, beispielsweise zwischen einem Erreichen der Auslösedrehwinkelposition und dem Senden angeben. Eine Verzögerungszeitspanne kann zusätzlich oder alternativ ein sogenanntes Winkel-Delay (Zeitspanne zum Durchlaufen eines vordefinierten Drehwinkels) und/oder eine Verzögerung der Auswertung der Drehwinkelindikation und/oder des Sendens des Kommunikationssignals sein. Eine Verzögerungszeitspanne kann zusätzlich oder alternativ eine gestaffelte Verzögerung sein. Eine Verzögerungszeitspanne kann zusätzlich oder alternativ einer Zeitspanne ab dem Losfahren entsprechen, beispielsweise zumindest 1min, 5min, 10min, 15min, 20min, 25min oder 30min. Beispielsweise kann erst nach Verstreichen der Verzögerungszeitspanne der Sendezeitpunkt bestimmt werden und/oder das Senden durchgeführt werden.

Auch kann die Zeitinformation einem (minimalen oder maximalen) Sendeintervall (z.B. zwischen zwei aufeinanderfolgenden Sendungen) entsprechen. Beispielsweise kann ein Sendeintervall zumindest oder höchstens 1 min, 2 min, 5 min, 10 min, 15 min, 20 min, 25 min, 30 min betragen. Beispielsweise kann (z.B. erst) nach Verstreichen des Sendeintervalls (z.B. nach dem letzten Senden) ein Sendezeitpunkt bestimmt werden, zu welchem die nächste Sendung ausgeführt werden soll. Auch kann der Sendezeitpunkt bestimmt werden und (z.B. nur) das anschließende Senden von einem Verstreichen des Sendeintervalls abhängig sein.

Pro Sendeintervall kann beispielsweise ein Reifeninnendruck erfasst werden.

Das Sendeintervall kann beispielsweise variabel sein, beispielsweise zufällig variabel, beispielsweise nach einer der oben offenbarten Wahrscheinlichkeitsverteilungen. Auch kann das Sendeintervall konstant sein, beispielsweise (z.B. fest) einprogrammiert. Das Sendeintervall kann auch abhängig von der Drehgeschwindigkeit des Rads sein, beispielsweise bei höheren Drehgeschwindigkeiten höher oder geringer als bei niedrigen Drehgeschwindigkeiten.

Gemäß einem Ausführungsbeispiel des ersten Aspekts
- geschieht das Senden mit einer variablen Sendeleistung, und/oder
- geschieht das Senden mit einer variablen Sendeleistung, wobei die Sendeleistung abhängig von einer Drehgeschwindigkeit des Rads ist.

Die Sendeleistung kann konstant sein, also für jede Sendung (Gesamtsendung und/oder Teilsendung) und/oder für jedes Datenpaket gleich. Auch kann die Sendeleistung variabel sein, insbesondere für zumindest zwei aufeinanderfolgende Sendungen verschieden. Insbesondere kann die Sendeleistung zufällig variiert sein, beispielsweise nach einer der oben genannten Wahrscheinlichkeitsverteilungen. Auch kann die Sendeleistung in Abhängigkeit von der Drehgeschwindigkeit des Rads variiert werden. Beispielsweise kann die Sendeleistung bei höheren Drehgeschwindigkeiten höher oder geringer sein als bei niedrigen Drehgeschwindigkeiten.

Gemäß einem Ausführungsbeispiel des ersten Aspekts
- wobei das Bestimmen des Sendezeitpunkts und/oder das Senden abhängig von einer Drehrichtung des Rads ist.

Beispielsweise kann das Bestimmen des Sendezeitpunkts und/oder das Senden nur dann durchgeführt werden, wenn die Drehrichtung des Rades anzeigt, dass sich das Fahrzeug in Vorwärtsrichtung bewegt.

Gemäß einem Ausführungsbeispiel des ersten Aspekts umfasst das Verfahren ferner
- ein Wiederholen des Sendens des Kommunikationssignals.

Beispielsweise kann ein Kommunikationssignal mit dem (im Wesentlichen) identischen Inhalt (insbesondere Reifendruckindikation, andere Bestandteile, beispielsweise eine Drehwinkelindikation, können variieren) zumindest ein zweites Mal gesendet werden. Beispielsweise kann das Kommunikationssignal zumindest 2, 3, 4, 5, 6, 7, 8, 9 oder 10 mal gesendet werden. Beispielsweise kann die Wiederholung des Sendens nach (zumindest) einer (oder mehreren) Radumdrehung stattfinden. Beispielsweise kann die Wiederholung auch innerhalb derselben Radumdrehung, während der auch das vorangehende Senden stattgefunden hat, vorgenommen werden. Beispielsweise kann das Kommunikationssignal (z.B. unmittelbar) in direkter Folge zumindest 2, 3, 4 oder 5 mal gesendet werden. Hier kann beispielsweise von einem Burst von Sendungen gesprochen werden. Von diesen Sendungen kann zumindest ein Teil innerhalb derselben Radumdrehung und/oder innerhalb des erlaubten Wertebereichs liegen.

Beispielsweise kann der zeitliche Abstand zwischen zumindest zwei der Wiederholungen und/oder zwischen der ersten und der letzten Sendung einer Mehrzahl von Wiederholungen (im Folgenden Wiederholungszeitraum), kleiner sein als ein Sendeintervall. Beispielsweise kann der Wiederholungszeitraum kürzer als ein Bruchteil, beispielsweise 1%, 2%, 5%, 10%, 15% oder 25%, des Sendeintervalls sein.

Eine Wiederholung des Sendens kann die Wahrscheinlichkeit des Empfangs deutlich erhöhen, allerdings zum Preis eines erhöhten Energieverbrauchs der Reifendrucksensoranordnung.

Gemäß einem Ausführungsbeispiel des ersten Aspekts
- ist das Wiederholen abhängig von einer Drehgeschwindigkeit des Rads und/oder
- ist das Wiederholen abhängig von einer Zeitinformation und/oder
- wird das Senden an verschiedenen Werten der Drehwinkelindikation und/oder der Drehwinkelposition wiederholt, und/oder
- wird das Senden mit einer konstanten oder variablen Sendeleistung wiederholt.

Das Wiederholen kann abhängig von einer Drehgeschwindigkeit des Rads sein. Beispielweise kann das Senden (z.B. nur) bei einer erhöhten Drehgeschwindigkeit oberhalb einer Grenzdrehgeschwindigkeit (z.B. zumindest 1 km/h, 2 km/h, 5 km/h, 10 km/h, 15 km/h, 20 km/h, 50 km/h, 100 km/h oder mehr) durchgeführt werden. Insbesondere kann eine Wiederholung des Sendens im Stillstand des Fahrzeugs (z.B. Drehgeschwindigkeit Null) unterbunden werden.

Die Wiederholungen des Sendens können an voneinander verschiedenen Werten der Drehwinkelindikation und/oder Drehwinkelposition durchgeführt werden. Die Werte können beispielsweise gleichverteilt sein, beispielsweise innerhalb eines erlaubten Wertebereichs.

Die Sendeleistung kann für die Wiederholungen (z.B. alle Wiederholungen) gleich sein, also konstant. Beispielsweise kann die Sendeleistung auch variiert werden, beispielsweise kann die Sendeleistung zufällig und/oder ansteigend/ abfallend über die Wiederholungen variiert werden.

Gemäß einem Ausführungsbeispiel des ersten Aspekts
- ist das Senden des Kommunikationssignals über mehrere voneinander verschiedene Teilsendungen verteilt.

Das Kommunikationssignal kann ein einziges, zusammenhängendes Signal sein. Beispielsweise kann das Kommunikationssignal ein einzelnes oder mehrere Datenpakete transportieren. Auch kann das Kommunikationssignal in mehrere Teilsendungen unterteilt sein. Beispielsweise können mehrere voneinander separate Datenpakete auf mehrere Teilsendungen verteilt sein. Die Teilsendungen transportieren (beispielsweise hierbei) jeweils nur einen Teil der Daten. Gemeinsam transportieren die Teilsendungen die vollständigen Daten. Mehrere Datenpakete und/oder deren Inhalt kann aufseiten des Empfängers wieder zusammengesetzt werden. Die Teilsendungen können in einem zeitlichen Abstand zueinander gesendet werden. Beispielsweise können die Teilsendungen auf mehrere Radumdrehungen verteilt sein. Beispielsweise können die Teilsendungen jeweils im erlaubten Bereich einer jeweiligen Radumdrehung gesendet werden.

Beispielsweise kann das Kommunikationssignal in Teilsendungen aufgeteilt werden, wenn die Drehgeschwindigkeit oberhalb von einem vordefinierten Drehgeschwindigkeitsschwellwert liegt. Beispielsweise kann sich die Sendedauer der Dauer des Durchlaufens des erlaubten Wertebereichs annähern oder diese übersteigen, wenn die Drehgeschwindigkeit zu hoch ist. Damit kann keine (z.B. vollständige) Sendung mehr innerhalb des erlaubten Wertebereichs gesendet werden. Oft kann das Kommunikationssignal nur als Ganzes erfolgreich empfangen werden, nicht jedoch, wenn nur ein Teil empfangen wird. Eine Aufteilung in Teilsendungen kann dieses Problem überwinden, da die Teilsendungen dank einer geringeren Menge transportierter Daten eine kürzere jeweilige Sendedauer benötigen. Diese jeweilige Sendedauer kann zeitlich in den erlaubten Wertebereich passen.

Gemäß einem Ausführungsbeispiel des ersten Aspekts,
- ist das Kommunikationssignal frei von einer Information zur Drehwinkelposition des Rads, und/oder umfasst das Kommunikationssignal ferner eine Identifikation der Reifendrucksensoranordnung, und/oder umfasst das Kommunikationssignal ferner eine Drehrichtungsindikation des Rads, und/oder umfasst das Kommunikationssignal ferner eine Drehgeschwindigkeitsindikation des Rads umfasst.

Gemäß einem Ausführungsbeispiel des ersten Aspekts
- Ableiten und/oder Bestimmen einer Drehwinkelposition des Rads, einer Drehrichtung des Rads und/oder einer Drehgeschwindigkeit des Rads aus der Drehwinkelindikation und/oder aus der zumindest einen erfassten Beschleunigung.

Die Drehwinkelposition des Rads, eine Drehrichtung des Rads und/oder eine Drehgeschwindigkeit des Rads kann insbesondere jeweils mit der Drehwinkelposition der Reifendrucksensoranordnung, einer Drehrichtung der Reifendrucksensoranordnung und/oder einer Drehgeschwindigkeit der Reifendrucksensoranordnung übereinstimmen.

Die zumindest eine erfasste Beschleunigung, insbesondere soweit diese senkrecht zur Rotationsachse des Rads erfasst wird, ist zumindest teilweise von der Erdbeschleunigung abhängig. Eine Drehwinkelposition des Rads kann damit aus der zumindest einen erfassten Beschleunigung abgeleitet und/oder bestimmt werden. Beispielsweise kann ausgehend von dem Betrag und dem Vorzeichen der zumindest einen erfassten Beschleunigung die Größe eines Winkels bestimmt werden, welcher zwischen der Erfassungsachse, in welcher die zumindest eine erfasste Beschleunigung erfasst wird, und einem Erdbeschleunigungsvektor, welcher zum Zentrum des Planeten ausgerichtet ist, auf welchem sich das Fahrzeug befindet, eingeschlossen wird. Dieser Winkel (beispielsweise plus einem konstanten Offset-Winkel) kann als die Drehwinkelposition betrachtet werden.

Falls sich das Rad in Rotation befindet, ist die Erdbeschleunigung überlagert von einer Zentrifugalbeschleunigung. Falls die Erfassungsachse, in welcher der Beschleunigungssensor die zumindest eine erfasste Beschleunigung erfasst, senkrecht zur Rotationsachse des Rads ausgerichtet ist, ist die erfasste Zentrifugalbeschleunigung bei konstanter Geschwindigkeit (z.B. Drehgeschwindigkeit und/oder Fahrzeuggeschwindigkeit) in etwa konstant über die Zeit. Somit kann, in einer einfachen Ausgestaltung, von der erfassten Beschleunigung die konstante Zentrifugalbeschleunigung abgezogen werden und somit die von der Erdbeschleunigung hervorgerufene Komponente der zumindest einen erfassten Beschleunigung isoliert werden. Beispielsweise kann die Zentrifugalbeschleunigung als der Mittelwert der zumindest einen erfassten Beschleunigung über eine Umdrehung des Rads und/oder über eine vordefinierte Zeitspanne bestimmt werden.

Zur Bestimmung und/oder Erfassung der Drehwinkelposition aus der zumindest einen erfassten Beschleunigung können zumindest zwei voneinander verschiedene Erfassungsachsen notwendig sein, in welchen die Beschleunigung erfasst wird. Die beiden Erfassungsachsen sind hierbei zumindest teilweise senkrecht zur Rotationsachse des Rads ausgerichtet und in Projektion entlang der Rotationsachse voneinander verschieden. Alternativ ist es möglich, die Beschleunigung lediglich in einer Erfassungsachse senkrecht zur Rotationsachse zu erfassen und hieraus die Drehwinkelposition abzuleiten. Beispielsweise kann hierbei, neben einer skalaren Beschleunigung, eine Drehrichtungsinformationen des Rads hinzugenommen werden, um die Drehwinkelposition abzuleiten und/oder zu bestimmen.

Beispielsweise kann das Senden des Kommunikationssignals von der abgeleiteten Drehgeschwindigkeit abhängig sein. Beispielsweise kann das Senden nur bei Drehgeschwindigkeiten oberhalb einer bestimmten Mindestdrehgeschwindigkeit durchgeführt werden. Im Stillstand könnten sich andere Fahrzeuge in der Nähe des Fahrzeugs befinden, welche die gesendeten Kommunikationssignale empfangen könnten. Fehlzuordnungen können die Folge sein. Durch ein Senden oberhalb der Mindestdrehgeschwindigkeit ist dieses Risiko geringer.

Auch die Drehrichtung des Rads und/oder der Reifendrucksensoranordnung kann aus der zumindest einen erfassten Beschleunigung abgeleitet und/oder bestimmt werden. Hierbei kann ebenfalls die von der Erdbeschleunigung verursachte Beschleunigungskomponente in einer Erfassungsachse und/oder insbesondere in zwei Erfassungsachsen, in welchen die Beschleunigung erfasst wird, betrachtet werden. Die zwei Erfassungsachsen können beispielsweise im Wesentlichen senkrecht zueinander und jeweils im Wesentlichen senkrecht zur Rotationsachse ausgerichtet sein. Die Drehrichtung kann beispielsweise unter Kenntnis eines Winkels zwischen den zumindest zwei Erfassungsachsen, in welchen die Beschleunigung erfasst wird, abgeleitet und/oder bestimmt werden.

Schließlich kann auch eine Drehgeschwindigkeit des Rads und/oder der Reifendrucksensoranordnung basierend auf der zumindest einen erfassten Beschleunigung abgeleitet und/oder bestimmt werden. Auch die Geschwindigkeit des Fahrzeugs kann auf diese Art, beispielsweise unter Berücksichtigung des Reifenumfangs, abgeleitet und/oder bestimmt werden. Hierbei kann beispielsweise, zusätzlich zu der Beschleunigung, eine Zeitinformation herangezogen werden. Beispielsweise kann die Zeit zwischen zwei Ereignissen gemessen werden, wobei die Ereignisse jeweils einmal pro Umdrehung des Rads auftreten. Das Ereignis kann beispielsweise ein aus der Beschleunigung abgeleitete Kontakt eines Bereichs, in welchem die Reifendrucksensoranordnung angeordnet ist, mit dem Boden umfassen. Beispielsweise kann das Ereignis in diesem Fall eine Erschütterung sein. Auch kann als das Ereignis das Erreichen eines betragsmäßig maximalen (beispielsweise positiven und/oder negativen) Beschleunigungswerts angenommen werden. Die Drehgeschwindigkeit kann insbesondere unter Heranziehung einer Beschleunigung entlang einer einzigen Erfassungsachse bestimmt und/oder abgeleitet werden.

Gemäß einem zweiten Aspekt der Erfindung wird eine Reifendrucksensoranordnung für Fahrzeuge, insbesondere Nutzfahrzeuge, vorgeschlagen, umfassend einen Drucksensor und Mittel, die dazu eingerichtet sind, das Verfahren nach dem ersten Aspekt auszuführen und/oder zu steuern.

Die Reifendrucksensoranordnung gemäß dem zweiten Aspekt ist insbesondere dazu geeignet, an dem Rads eines Fahrzeugs angeordnet, insbesondere an dem Rad befestigt, zu werden. Beispielsweise kann die Reifendrucksensoranordnung ein Befestigungsmittel umfassen und/oder dazu eingerichtet sein, mittels eines Befestigungsmittels an dem Rad befestigt zu werden. Beispielsweise können die Befestigungsmittel an einem Gehäuse der Reifendrucksensoranordnung angeordnet sein.

Beispielsweise kann die Reifendrucksensoranordnung an der Felge des Rads angeordnet werden, beispielsweise mit einem Spanngurt um die Felge gespannt werden. Auch eignet sich die Umgebung eines Ventils des Rads zur Befestigung der Reifendrucksensoranordnung. Die Reifendrucksensoranordnung kann beispielsweise im Innenraum des Rads in der Nähe des Ventils, beispielsweise mit dem Ventil verbunden, angeordnet sein. Alternativ kann die Reifendrucksensoranordnung außen an der Felge im Bereich des Ventils angeordnet sein. In diesem Fall muss eine fluidische Verbindung zwischen dem Reifendrucksensor und einem Innenraum des Ventils, welcher mit dem Innenraum des Reifens verbunden ist, vorgesehen werden. Eine fluidische Verbindung ist insbesondere eine gasdurchlässige Verbindung, welche einen Druckausgleich zwischen den durch die fluidische Verbindung verbundenen Volumina zulässt. Auch möglich ist es, die Reifendrucksensoranordnung mit einem flexiblen Befestigungselement, beispielsweise einem Band, lose mit der Felge und/oder dem Reifen zu verbinden, sodass die Reifendrucksensoranordnung bei Rotation des Rads durch die auf die Reifendrucksensoranordnung einwirkende Zentrifugalkraft in den Zwischenraum zwischen Reifen und Felge gehoben wird, und durch das flexible Befestigungselement gehalten wird. Alternativ oder zusätzlich kann die Reifendrucksensoranordnung an dem Reifen angeordnet sein. Beispielsweise kann die Reifendrucksensoranordnung an eine Innenwand des Reifens anvulkanisiert werden.

Eine Anordnung des Reifendrucksensors, welche radial zur Rotationsachse des Rads besonders weit außen liegt (beispielsweise am Reifen selbst), kann den Vorteil haben, dass sich die Position der Reifendrucksensoranordnung mit Variation der Drehwinkelposition besonders stark verändert. Hierdurch kann eine besonders starke Veränderung der durch den Empfänger erfassten Signalstärke mit Änderung der Drehwinkelposition erreicht werden, was für die Zuordnung von Reifendrucksensoranordnung und Radposition besonders vorteilhaft sein kann.

Die Reifendrucksensoranordnung umfasst einen Drucksensor. Der Drucksensor kann beispielsweise kapazitiv, induktiv, piezoelektrisch und/oder piezoresistiv aufgebaut sein. Der Drucksensor ist fluidisch mit einem Innenraum des Reifens verbunden. Beispielsweise ist der Drucksensor an einem Außenbereich der Reifendrucksensoranordnung angebracht. Auch möglich ist es, ein Gehäuse der Reifendrucksensoranordnung zumindest mit einer Öffnung zu versehen, mittels derer ein Druckausgleich zwischen einem Innenraum des Gehäuses und dem Innenraum des Reifens hergestellt werden kann.

Die Reifendrucksensoranordnung kann insbesondere zumindest zwei oder mehr Drucksensoren umfassen. Hierdurch kann Redundanz geschaffen werden, was eine Ausfallwahrscheinlichkeit der Reifendrucksensoranordnung reduziert. Gleichzeitig kann die Messgenauigkeit erhöht werden.

Die Mittel zur Ausführung des Verfahrens gemäß des ersten Aspekts können beispielsweise Rechenmittel umfassen. Rechenmittel können beispielsweise zumindest einen Prozessor, einen Speicher, einen Microcontroller, ein Field Programmable Gate Array (FPGA), einen Applikationsspezifischen Integrierten Schaltkreis (ASIC) und/oder Kombinationen hieraus umfassen. Beispielsweise kann ein Speicher der Rechenmittel Instruktionen umfassen, welche, wenn sie von den zumindest einen Rechenmittel ausgeführt werden, die Reifendrucksensoranordnung dazu veranlassen, das Verfahren gemäß dem ersten Aspekt auszuführen und/oder zu steuern. Beispielsweise können hierfür funktionale Einheiten vorgesehen sein, welche die Schritte des Verfahrens steuern und/oder ausführen. Eine funktionale Einheit kann beispielsweise mit Instruktionen korrespondieren, welche die Steuerung und/oder Ausführung der jeweiligen Schritte des Verfahrens bewirken. Alternativ oder zusätzlich kann eine funktionale Einheit einer Verschaltung eines programmierten FPGA, ein Teilbereich eines ASIC und/oder Kombinationen hieraus sein.

Die Reifendrucksensoranordnung kann ferner zumindest einen Energiespeicher umfassen, beispielsweise eine Batterie und/oder einen Akkumulator. Beispielsweise kann der Energiespeicher wiederaufladbar sein.

Die Reifendrucksensoranordnung kann ferner ein Zeiterfassungsmittel umfassen, welches die Erfassung verstrichener Zeitspannen erlaubt. Beispielsweise kann dies ein Timer (beispielsweise eines Microcontrollers) sein, beispielsweise basierend auf einem Quarz.

Die Reifendrucksensoranordnung ist insbesondere dazu eingerichtet, den Innendruck des Reifens zu erfassen, an welchem die Reifendrucksensoranordnung angeordnet ist.

Gemäß einem Ausführungsbeispiel des zweiten Aspekts
- ist der Drucksensor für das Erfassen des Innendrucks eines Reifens eines Rads eingerichtet, und/oder
- umfassend ein Bestimmungsmittel, wobei das Bestimmungsmittel für das Bestimmen des Sendezeitpunkts eingerichtet ist, und/oder
- umfassend ein Kommunikationsmittel, wobei das Kommunikationsmittel für das Senden des Kommunikationssignals eingerichtet ist.

Der Drucksensor kann, in den im Hinblick auf das Verfahren gemäß dem ersten Aspekt offenbarten Vorgehensweisen, den Innendruck eines Reifens eines Rads erfassen. Insbesondere kann der Drucksensor den Innendruck des Reifens erfassen, an dem die Reifendrucksensoranordnung angeordnet ist.

Das Bestimmungsmittel kann beispielsweise (eine funktionale Einheit in einem) Rechenmittel sein. Ein Rechenmittel kann beispielsweise zumindest einen Prozessor, einen Speicher, einen Microcontroller, ein FPGA, einen ASIC und/oder Kombinationen hieraus umfassen. Beispielsweise kann ein Speicher des Rechenmittels Instruktionen umfassen, welche, wenn sie von den zumindest einen Rechenmittel ausgeführt werden, die Reifendrucksensoranordnung dazu veranlassen, die entsprechenden Schritte des Verfahrens gemäß dem ersten Aspekt auszuführen und/oder zu steuern. Eine funktionale Einheit kann beispielsweise eine Menge von Instruktionen sein, welche die Steuerung und/oder Ausführung der jeweiligen Schritte des Verfahrens bewirken. Alternativ oder zusätzlich kann eine funktionale Einheit einer Verschaltung eines programmierten FPGA, ein Teilbereich eines ASIC und/oder Kombinationen hieraus sein.

Das Kommunikationsmittel kann beispielsweise mit den Mitteln, beispielsweise mit einem Rechenmittel, der Reifendrucksensoranordnung verbunden sein, beispielsweise durch eine Kommunikationsverbindung, insbesondere durch eine drahtgebundene Kommunikationsverbindung.

Das Kommunikationsmittel ist insbesondere ein drahtloses Kommunikationsmittel. Das Kommunikationsmittel kann beispielsweise zumindest eine Antenne umfassen, über welche das Kommunikationsmittel elektromagnetische Wellen aussenden kann. Das Kommunikationsmittel kann beispielsweise dazu eingerichtet sein, auf einer Trägerfrequenz ein Signal (beispielsweise das Kommunikationssignal) aufzumodulieren. Beispielsweise kann die Trägerfrequenz im Bereich einiger hundert MHz liegen, beispielsweise zwischen 100 und 800 MHz, beispielsweise 433 MHz. Beispielsweise ist das Kommunikationsmittel dazu eingerichtet, gemäß einem drahtlosen Kommunikationsstandard Nachrichten auszusenden. Beispielsweise kann dieser Kommunikationsstandard ein Bluetooth Standard sein (https://www.bluetooth.com), Zigbee, ein anderer Kommunikationsstandard und/oder Kombinationen hieraus. Alternativ oder zusätzlich kann das Kommunikationsmittel dazu eingerichtet sein, eine paketbasierte Übermittlung von Daten zu ermöglichen.

Gemäß einem Ausführungsbeispiel des zweiten Aspekts
- ist das Kommunikationsmittel zu einem drahtlosen und unidirektionalen Senden in Form eines Broadcasts eingerichtet.

Beispielsweise kann das das Kommunikationsmittel zu einem drahtlosen und unidirektionalen Senden eingerichtet sein. Beispielsweise kann das Kommunikationsmittel dazu eingerichtet sein, das Kommunikationssignal in Form eines Broadcasts auszusenden. Das Kommunikationssignal und/oder das Senden des Kommunikationssignals kann hierbei nicht spezifisch für einen Empfänger sein, sondern unspezifisch. Das Senden kann unabhängig von einer Rückmeldung eines Empfängers zu der Sendung sein. Alternativ kann das Kommunikationsmittel zu einer bidirektionalen Kommunikation eingerichtet sein. In diesem Fall ist das Kommunikationsmittel in der Lage, sowohl zu senden (insbesondere das Kommunikationssignal), als auch zu empfangen, beispielsweise eine Empfangsbestätigung des Empfängers zu dem von dem Kommunikationsmittel ausgesendeten Kommunikationssignal.

Beispielsweise kann die Reifendrucksensoranordnung dazu eingerichtet sein (und gleichermaßen das Verfahren nach dem ersten Aspekt entsprechende Schritte umfassen), basierend auf einer bidirektionalen Kommunikation (z.B. selbsttätig) einen erlaubten und/oder verbotenen Wertebereich zu bestimmen und/oder abzuleiten. Beispielsweise kann die Reifendrucksensoranordnung zu Sendedrehwinkeln vergangener gesendeter Kommunikationssignale Informationen/Daten dazu abspeichern, ob eine Empfangsbestätigung empfangen wurde oder nicht. Für Sendedrehwinkel, zu welchen eine Empfangsbestätigung empfangen wurde, können entsprechende Drehwinkelindikationen und/oder Drehwinkelindikationen einem erlaubten Wertebereich hinzugefügt werden. Für Sendedrehwinkel, zu welchen keine Empfangsbestätigung empfangen wurde, können entsprechende Drehwinkelindikationen und/oder Drehwinkelindikationen einem verbotenen Wertebereich hinzugefügt werden. Die Sendezeitpunkte können beispielsweise in einer Anlernphase zunächst zufällig (z.B. unabhängig von der Drehwinkelposition) ausgewählt werden. Sobald ein vordefiniertes Kriterium erfüllt ist, beispielsweise eine vordefinierte Anzahl erfolgreicher Übertagungen (z.B. empfangener Empfangsbestätigungen) und/oder ein verbotener und/oder erlaubter Wertebereich (z.B. hinreichender Größe) bestimmt und/oder abgeleitet wurde, kann der Sendezeitpunkt wie oben beschrieben abhängig von der Drehwinkelindikation (z.B. unter Berücksichtigung des erlaubten und/oder verbotenen Wertebereichs) bestimmt und/oder abgeleitet werden.

Gemäß einem Ausführungsbeispiel des zweiten Aspekts
- einen Beschleunigungssensor, wobei der Beschleunigungssensor dazu eingerichtet ist, die zumindest eine Beschleunigung zu erfassen.

Die in Hinblick auf das Verfahren gemäß des ersten Aspekts offenbarten Erfassungsweisen sind hiermit ebenfalls für die Reifendrucksensoranordnung offenbart.

Der Beschleunigungssensor ist insbesondere dazu eingerichtet, eine, zwei oder drei Beschleunigungen zu erfassen, insbesondere in jeweils voneinander verschiedenen Erfassungsachsen.

Beispielsweise kann der Beschleunigungssensor sich in zumindest zwei einzelne Unterbeschleunigungssensoren aufteilen. Ein Unterbeschleunigungssensor kann beispielsweise in einer oder zwei oder drei Erfassungsachsen eine Beschleunigung erfassen. Beispielsweise kann ein erster Unterbeschleunigungssensor mit dem Drucksensor integriert sein und eine erste Beschleunigung entlang einer ersten Erfassungsachse erfassen, während darüber hinaus ein zweiter Unterbeschleunigungssensor getrennt von dem Drucksensor vorgesehen ist. Der zweite Unterbeschleunigungssensor kann dazu eingerichtet sein, eine Beschleunigung in mindestens einer weiteren Erfassungsachse, welche sich von der ersten Erfassungsachse unterscheidet, zu erfassen. Auch möglich ist es, dass der zweite Unterbeschleunigungssensor zwei und/oder drei Beschleunigungen erfasst. Durch das Vorsehen eines weiteren Unterbeschleunigunssensors, zusätzlich zu einem bereits in dem Drucksensor integrierten unterbeschleunigungssensor, kann besonders platzsparend und günstig eine weitere Erfassungsachse, in welcher eine Beschleunigung erfasst wird, bereitgestellt werden wodurch sich die Drehrichtung und die Drehwinkelposition ableiten und/oder bestimmen lässt.

Die Ausrichtung von zumindest zwei Erfassungsachsen, in welchen eine jeweilige Beschleunigung erfasst wird, ist insbesondere so gewählt, dass diese in einer Einbauposition der Reifendrucksensoranordnung im Wesentlichen senkrecht zur Rotationsachse des Rads ausgerichtet sind.

Gemäß einem Ausführungsbeispiel des zweiten Aspekts umfasst die Reifendrucksensoranordnung ferner
- ein Ableitungs- und/oder Bestimmungsmittel, wobei das Ableitungs- und/oder Bestimmungsmittel für die Ableitung der Drehwinkelposition, der Drehrichtung und/oder der Drehgeschwindigkeit des Rads eingerichtet ist.

Das Ableitung- und/oder Bestimmungsmitteln kann insbesondere ein Rechenmittel sein. Das Rechenmittel kann beispielsweise zumindest einen Prozessor, einen Speicher, einen Microcontroller, ein Field Programmable Gate Array (FPGA), einen Applikationsspezifischen Integrierten Schaltkreis (ASIC) und/oder Kombinationen hieraus umfassen. Beispielsweise kann ein Speichermittel Instruktionen umfassen, welche, wenn sie von dem zumindest einen Rechenmittel ausgeführt werden, die Reifendrucksensoranordnung dazu veranlassen, die Drehwinkelposition, die Drehrichtung und/oder die Drehgeschwindigkeit des Rads abzuleiten und/oder zu bestimmen. Beispielsweise kann das Ableiten und/oder Bestimmen auf der zumindest einen erfassten Beschleunigung basieren.

Die Ableitung und/oder Bestimmung der jeweiligen Größe kann, wie in der in Hinblick auf den ersten Aspekt offenbarten Art und Weise, erfolgen.

Gemäß einem dritten Aspekt der Erfindung wird ein Rad für Fahrzeuge, insbesondere Nutzfahrzeuge, vorgeschlagen, umfassend eine Reifendrucksensoranordnung gemäß dem zweiten Aspekt.

Gemäß einem vierten Aspekt der Erfindung wird ein Fahrzeug, insbesondere Nutzfahrzeug, vorgeschlagen, umfassend ein Rad gemäß dem dritten Aspekt.

Gemäß einem Ausführungsbeispiel des vierten Aspekts
- ist das Fahrzeug ein Anhänger und/oder
- umfasst das Fahrzeug zumindest sechs Radpositionen.

Das Fahrzeug kann insbesondere ein Anhänger sein, insbesondere für die Verwendung als Nutzfahrzeug, wie in Hinblick auf den ersten Aspekt offenbart.

Beispielsweise kann das Fahrzeug zumindest sechs Radpositionen aufweisen, wobei auf der rechten und der linken Seite des Fahrzeugs jeweils drei Räder in Fahrtrichtung hintereinander angeordnet sind.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln.

Insbesondere sollen Merkmale, die in den Figuren enthalten sind, keineswegs als notwendiger Bestandteil der vorliegenden Erfindung erachtet werden.

Es zeigen:
- Fig. 1: eine schematische Darstellung einer beispielhaften Ausführungsform eines Straßennutzfahrzeugs gemäß der Erfindung;
- Fig. 2: eine schematische Darstellung einer beispielhaften Ausführungsform eines Rads mit einer Reifendrucksensoranordnung gemäß der Erfindung;
- Fig. 3: eine schematische Darstellung einer beispielhaften Ausführungsform eines Straßennutzfahrzeugs gemäß der Erfindung;
- Fig. 4: eine schematische Darstellung einer beispielhaften Ausführungsform eines Signalstärkeprofils gemäß der Erfindung;
- Fig. 5: eine schematische Darstellung einer beispielhaften Ausführungsform von verschiedenen Radpositionen gemäß der Erfindung;
- Fig. 6a-c: schematische Darstellungen einer beispielhaften Ausführungsform eines Signalstärkeprofils und erlaubten und verbotenen Wertebereichen gemäß der Erfindung;
- Fig. 7: eine schematische Darstellung einer beispielhaften Ausführungsform einer Reifendrucksensoranordnung gemäß dem ersten und zweiten Aspekt der Erfindung;
- Fig. 8a,b: schematische Darstellungen einer beispielhaften Ausführungsform Erfassung einer Beschleunigung gemäß der Erfindung;
- Fig. 9: ein Fließdiagramm einer beispielhaften Ausführungsform des Verfahrens gemäß dem ersten und zweiten Aspekt der Erfindung;
- Fig. 10: ein Blockdiagramm einer beispielhaften Ausführungsform gemäß dem ersten und zweiten Aspekt der Erfindung;
- Fig. 11: beispielhafte Speichermedien.

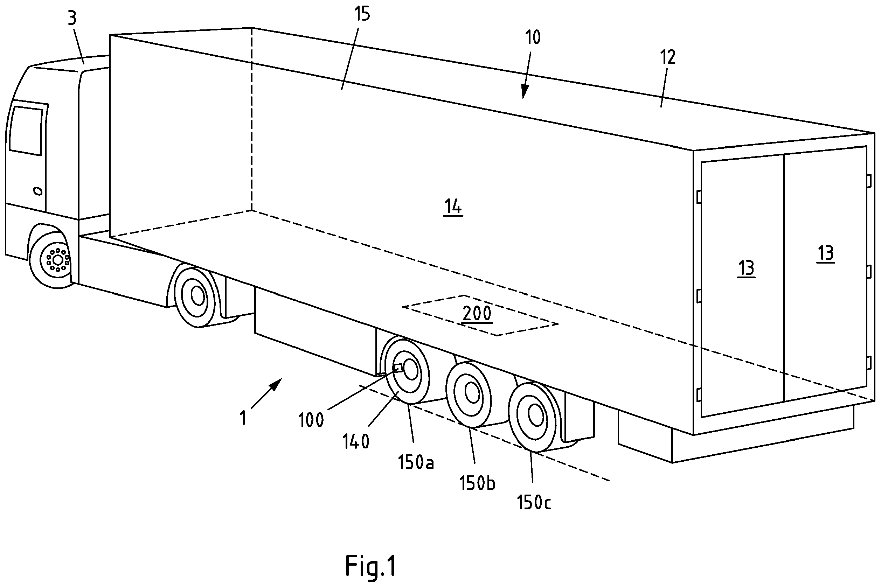

Fig. 1 ist eine schematische Darstellung einer beispielhaften Ausführungsform eines Fahrzeugs 1 gemäß der Erfindung, beispielsweise nach dem vierten Aspekt der Erfindung.

Das gezeigte Fahrzeug 1 ist ein Nutzfahrzeug 1, genauer ein Anhänger 1, genauer noch ein Sattelauflieger 1 mit einem Kofferaufbau 10. Der Kofferaufbau 10 umfasst eine feste Stirnwand 11, ein festes Dach 12, eine durch Flügeltüren 13 gebildete Rückwand und feste Seitenwände 14. Der Kofferaufbau 10 umschließt dabei einen Laderaum 15 zur Aufnahme von zu transportierenden Gütern.

In dem Fahrzeug 1 ist eine Vorrichtung 200 vorgesehen, welche dazu eingerichtet sein kann, Kommunikationssignale von mindestens einer Reifendrucksensoranordnung zu empfangen, wobei die ungefähre Position der Vorrichtung 200 am Fahrzeug 1 gestrichelt angedeutet ist. Bei der Vorrichtung 200 kann es sich beispielsweise um eine Telematikeinheit des Fahrzeugs 1 handeln. An zumindest einem der Räder 140, an einer Reifenposition 150a oder auch an Rädern weiterer Radpositionen 150b und 150c des Fahrzeugs 1, ist eine Reifendrucksensoranordnung 100, beispielsweise gemäß dem zweiten Aspekt der Erfindung, angeordnet. Diese sendet Kommunikationssignale, welche von der Vorrichtung 200 empfangen werden.

Der Sattelauflieger 1 wird von einem Zugfahrzeug 3 gezogen.

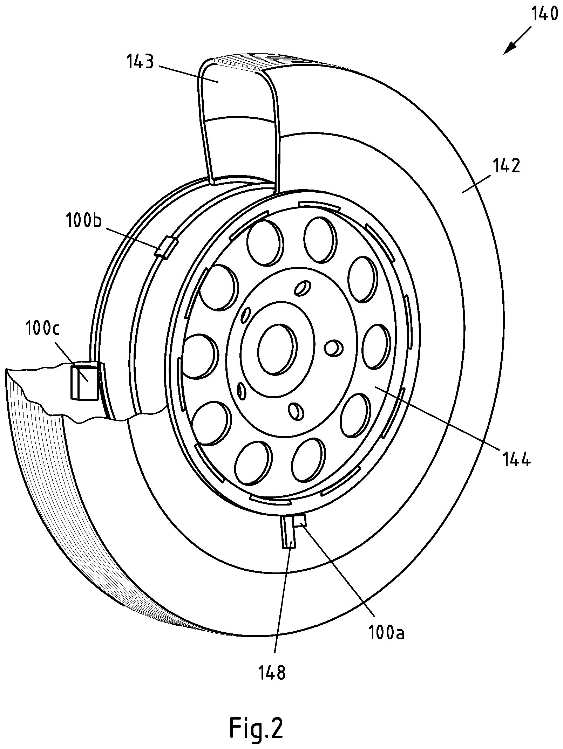

Fig. 2 zeigt ein Rad 140. Dieses umfasst einen Reifen 142. Der Reifen 142 kann beispielsweise Gummi und Metalleinlagen umfassen. Ferner umfasst das Rad 140 eine Felge 144. Die Felge 144 kann beispielsweise aus einem Metallwerkstoff gefertigt sein. Zwischen der Felge 144 und dem Reifen 142 befindet sich ein Innenraum 143 des Reifens 142. Der Innenraum 143 ist mit einem Gas, insbesondere Luft, gefüllt und steht unter Druck. Über ein Ventil 148 kann der Innenraum 143 mit dem Gas befüllt werden.

An dem Rad 140 ist eine Reifendrucksensoranordnung 100a, 100b, 100c, beispielsweise gemäß dem zweiten Aspekt der Erfindung, angeordnet. Zu Illustrationszwecken sind drei solcher Reifendrucksensoranordnungen 100a, 100b, 100c gezeigt. Üblicherweise wird nur eine Reifendrucksensoranordnung 100a, 100b, 100c pro Rad verwendet. Gezeigt sind verschiedene Befestigungsmethoden. So kann die Reifendrucksensoranordnung 100a in einem Bereich am Ventil 148 des Rads 140 angeordnet sein, entweder innerhalb des Innenraums 143 oder außen an der Felge 144. Die Reifendrucksensoranordnung 100b kann auch mit einem Spanngurt an/auf der Felge 144 befestigt sein oder, siehe Reifendrucksensoranordnung 100c, mit dem Reifen verbunden, beispielsweise anvulkanisiert, sein.

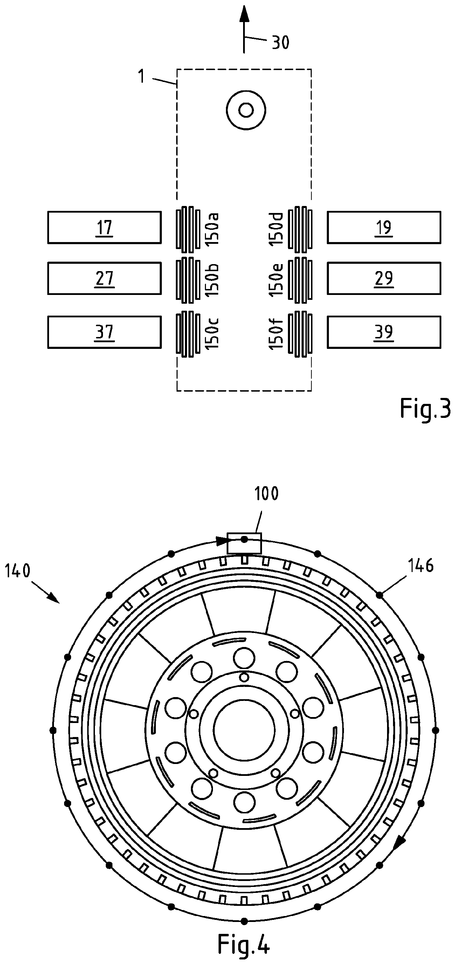

Fig. 3 zeigt eine schematische Ansicht eines Fahrzeugs 1 gemäß einem Ausführungsbeispiel, beispielsweise gemäß dem vierten Aspekt der Erfindung. Das Fahrzeug 1 ist ein Anhänger 1. Dieser wird von einer nicht dargestellten Zugmaschine in einer Vorwärtsfahrtrichtung 30 gezogen. Zu sehen sind die sechs Radpositionen 150a bis 150f. Den Radpositionen 150a - 150f ist jeweils eine Zahl zugeordnet, wie in Fig. 3 gezeigt.

Fig. 4 zeigt ein Rad 140 mit einer Reifendrucksensoranordnung 100, beispielsweise nach dem zweiten Aspekt der Erfindung. Zu sehen sind ebenfalls mehrere Drehwinkelpositionen 146. Wenn sich das Rad 140 dreht, durchläuft dieses und damit auch die Reifendrucksensoranordnung 100 die gezeigten Drehwinkelpositionen 146. Gezeigt ist eine beschränkte Anzahl von diskreten Drehwinkelpositionen 146. Für die gezeigten Drehwinkelpositionen 146 kann jeweils eine Signalstärke mit einer Vorrichtung (beispielsweise einer CTU des Fahrzeugs, z.B. Vorrichtung gemäß dem vierten Aspekt) gemessen werden. Hieraus kann das Signalstärkeprofil für das Rad 140, bzw. für die jeweilige Radposition, an welcher das Rad 140 angeordnet ist, erstellt werden.

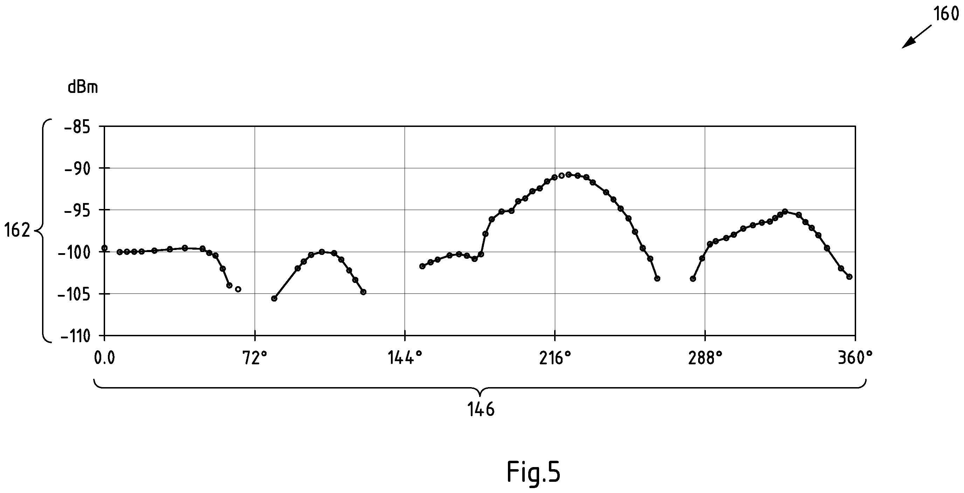

Fig. 5 illustriert ein beispielhaftes Signalstärkeprofil 160. Aufgetragen ist die empfangene Signalstärke 162 gegenüber der Drehwinkelposition 146. Die Drehwinkelpositionen decken vorliegend nur einen Drehwinkelbereich von 0 bis 120° (anstatt 360°) ab. Beispielsweise kann die Richtcharakteristik der Reifendrucksensoranordnung die Ursache dafür sein, dass ohnehin nur in einem Teilbereich der Drehwinkelpositionen 146 ein Signal empfangen werden kann. In diesem Falle kann der Rest der Drehwinkelpositionen 146 außer Acht bleiben. Die Signalstärke 162 kann beispielsweise eine empfangene Leistung, ein Signal-zu-Rausch Verhältnis und/oder ein RSSI Wert (wie gezeigt, in dB) sein. Die Drehwinkelposition 146 kann beispielsweise in Grad, und auch auf einem größeren Wertebereich als gezeigt, von bis zu 0° bis 360° festgehalten sein. Das Signalstärkeprofil 160 ist insbesondere spezifisch für eine bestimmte Radposition 150 des Fahrzeugs 1. Zu erkennen sind verschieden hohe Signalstärken 162 für verschiedene Drehwinkelpositionen 146. Insbesondere gibt es Drehwinkelpositionen, an welchen die empfangene Signalstärke 162 Null beträgt, an denen also (bislang) kein Signal empfangen wurde.

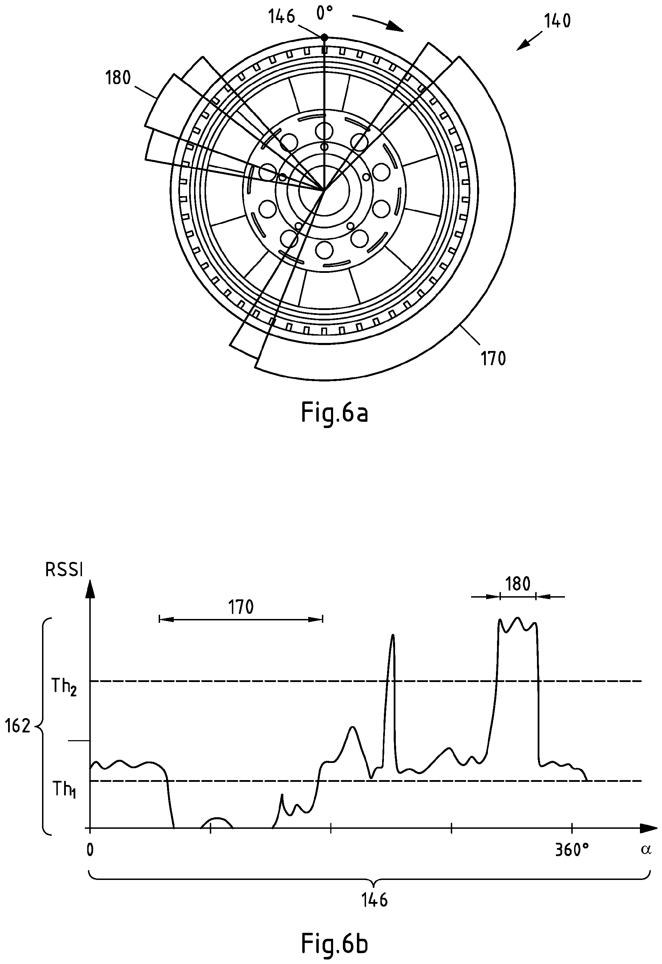

Fig. 6a zeigt für ein Rad 140 einen erlaubten Wertebereich 180 von Drehwinkelpositionen 146 und einen verbotenen Wertebereich 170 von Drehwinkelpositionen 146. Beide Wertebereiche umfassen einen Kernbereich, gekennzeichnet durch einen erhöhten Radius, und einen Nebenbereich, gekennzeichnet von einem leicht reduzierten Radius. Es kann vorteilhaft sein, (z.B. nur) innerhalb des erlaubten Wertebereichs 180 ein Kommunikationssignal zu senden. Beispielsweise kann die Reifendrucksensoranordnung nach dem zweiten Aspekt ein Kommunikationssignal senden, wenn sie sich gerade in dem erlaubten Wertebereich 180 befindet. In dem verbotenen Wertebereich 170 hingegen ist die Wahrscheinlichkeit einer erfolgreichen Signalübertragung besonders gering. Ein Senden eines Kommunikationssignals sollte in diesem Wertebereich von Drehwinkelpositionen folglich vermieden werden.

Die erlaubten und verbotenen Wertebereiche 180, 170, in Fig. 6a dargestellt, können ausgehend auf einem Signalstärkeprofil 160, wie es in Fig. 6b gezeigt ist, bestimmt werden. Das Signalstärkeprofil 160 kann, wie in Fig. 5 dargestellt, eine Verteilung der erfassten Signalstärke 162 über einer Drehwinkelposition 146 angeben. Beispielsweise kann ein tiefer Schwellwert Th1 sowie ein hoher Schwellwert Th2 für die Signalstärke 162 angesetzt werden, auf deren Basis Wertebereiche von Drehwinkelpositionen 146 bestimmt werden, die erlaubt oder verboten sind. Der verbotene Wertebereich 170 weist Signalstärken 162 unterhalb des niedrigen Schwellwerts Th1 auf, unter anderem viele Nullstellen mit einer Signalstärke 162 Null. Der erlaubte Wertebereich 180 umfasst Signalstärken 162 oberhalb des hohen Schwellwerts Th2. Das Signalstärkeprofil 160 weist auch einen schmalen Ausschlag auf, der ebenfalls oberhalb des hohen Schwellwerts Th2 liegt. Allerdings ist dieser zu schmal für eine erfolgreiche Übertragung des Kommunikationssignals und erfüllt nicht das Kriterium einer Mindestgröße. Folglich wurde dieser in Fig. 6a nicht als separater erlaubter Bereich 180 gekennzeichnet.

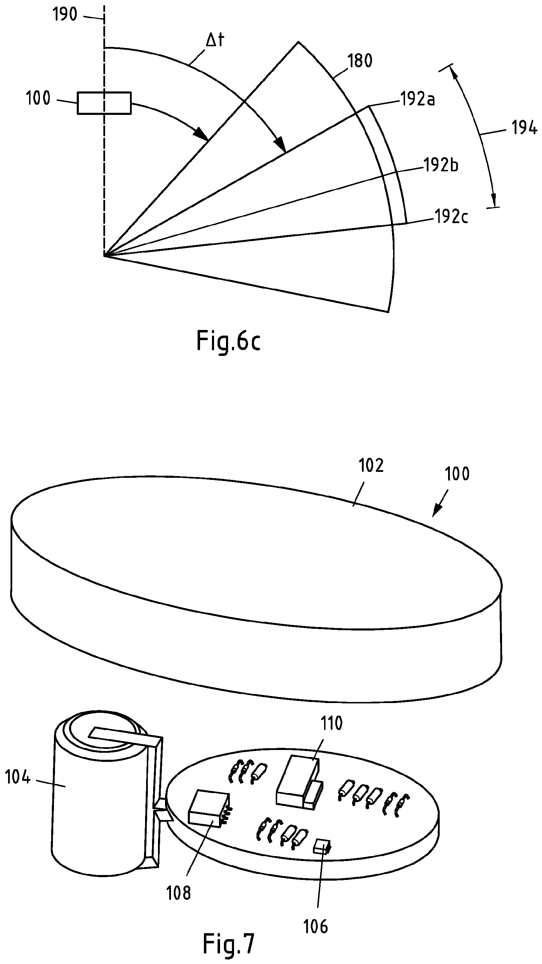

Fig. 6c zeigt ein Ausführungsbeispiel, in dem die Bestimmung eines Sendezeitpunkts illustriert ist. Zunächst passiert die momentane Drehwinkelposition und/oder eine Reifendrucksensoranordnung 100, insbesondere nach dem zweiten Aspekt, eine Auslösedrehwinkelposition 190. Zu dem Zeitpunkt des Passierens Auslösedrehwinkelposition 190 wird eine Wartezeit *Δ*t addiert, sodass der Sendezeitpunkt bestimmt werden kann, welcher mit einem Sendedrehwinkel 192a korrespondiert, welcher den Beginn des Sendens markiert. Der Sendedrehwinkel kann auch der Drehwinkelposition des Endes des Sendens (192c) oder einer zeitlichen Mitte des Sendens (192b) entsprechen. Während der Sendedauer wird der Sendedrehwinkelbereich 194 durchlaufen.

Fig. 7 zeigt eine Reifendrucksensoranordnung 100 gemäß einem Ausführungsbeispiel. Die Reifendrucksensoranordnung 100 umfasst ein Gehäuse 102, welches die Elektronik einhaust. Als Energiespeicher 104 ist eine Knopfzelle 104 vorgesehen. Auf der Platine sind eine Antenne 110 des Kommunikationsmittels, ein Drucksensor 106 sowie ein Beschleunigungssensor 108 angeordnet.

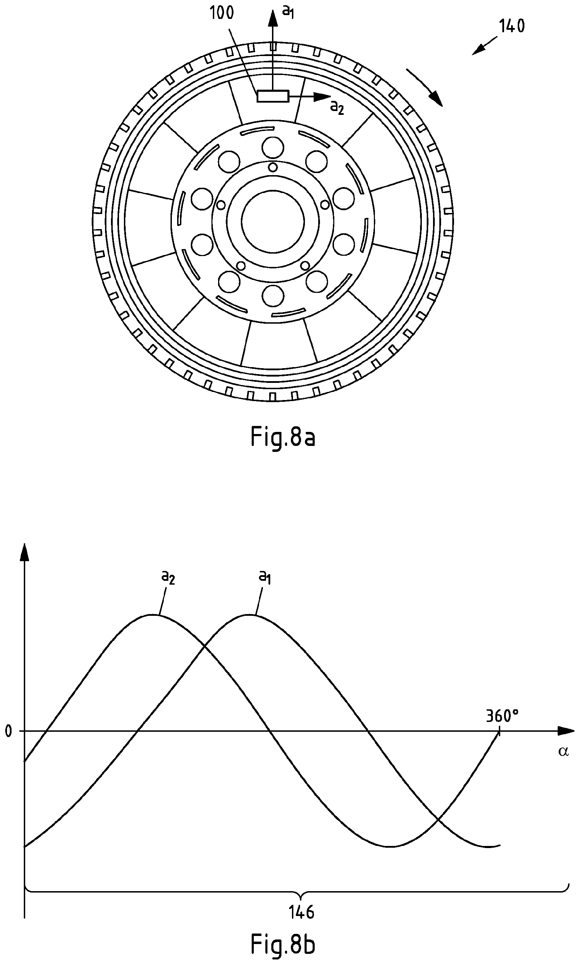

Fig. 8a illustriert ein Ausführungsbeispiel gemäß der Erfindung in dem zwei Beschleunigungen von einer Reifendrucksensoranordnung 100, beispielsweise gemäß dem zweiten Aspekt, erfasst werden. Es werden zwei separate Beschleunigungen a1 und a2 in zueinander im Wesentlichen senkrechten Erfassungsachsen erfasst. Die beiden Erfassungsachsen sind jeweils im Wesentlichen senkrecht zur Rotationsachse des Rads 140 ausgerichtet.

Wenn sich das Rad 140 (z.B. langsam) dreht, werden von den beiden Beschleunigungssensoren die Beschleunigungen gemäß dem Diagramm in Fig. 8b aufgezeichnet. Es fehlt die Zentrifugalbeschleunigung, da sich das Rad 140 langsam dreht und/oder die Zentrifugalbeschleunigung bereits subtrahiert wurde. Einzig die von der Erdbeschleunigung bewirkten Beschleunigungswerte a1 und a2 sind zu sehen. Jeder Drehwinkelposition lässt sich eine eindeutige Kombination aus Beschleunigungswerten zuordnen und umgekehrt, sodass sich aus den beiden Beschleunigungswerten a1, a2 die Drehwinkelposition 146 ableiten lässt, beispielsweise unter Nutzung des Arkustangens des Quotienten aus a1 und a2. Auch die Drehgeschwindigkeit und die Drehrichtung lässt sich gleichermaßen aus den Beschleunigungswerten a1, a2 ableiten.

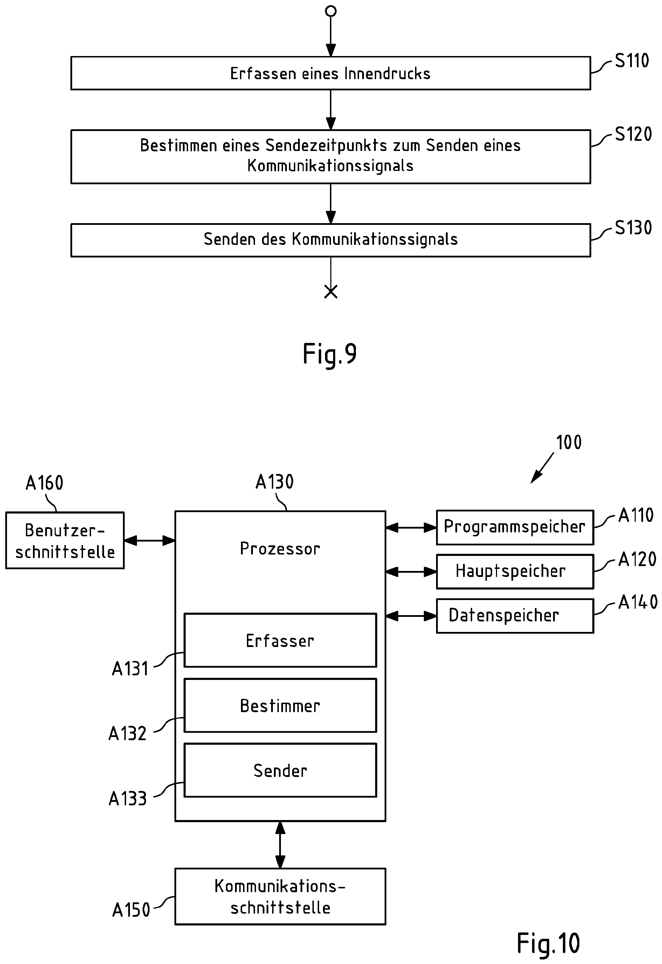

Fig. 9 ist ein Fließdiagram, welches das Verfahren gemäß dem ersten Aspekt illustriert, welches beispielsweise von einer Reifendrucksensoranordnung 100 gemäß dem zweiten Aspekt ausgeführt wird. Zunächst wird in Schritt S110 ein Innendruck des Reifens erfasst, insbesondere mit dem Drucksensor 106 einer Reifendrucksensoranordnung 100, beispielsweise nach dem zweiten Aspekt. In Schritt S120 wird ein Sendezeitpunkt für ein Kommunikationssignal bestimmt. Dann wird das Kommunikationssignal in Schritt S130 gesendet, welches eine Reifendruckindikation umfasst.

Fig. 10 zeigt ein Ausführungsbeispiel einer Reifendrucksensoranordnung 100 gemäß dem zweiten Aspekt. Die Reifendrucksensoranordnung 100 kann einen Programmspeicher A110, einen Hauptspeicher A120 und einen Datenspeicher A140 umfassen. Die Reifendrucksensoranordnung 100 kann ferner eine Benutzerschnittstelle A160 umfassen, die es beispielsweise einem Benutzer der Vorrichtung ermöglichen kann, mit ihr zu interagieren. Die Reifendrucksensoranordnung 100 kann ferner eine Kommunikationsschnittstelle A150 umfassen, die beispielsweise so konfiguriert sein kann, dass sie mit mindestens einer anderen Vorrichtung (z.B. CTU, z.B. Vorrichtung nach dem vierten Aspekt) kommuniziert. Insbesondere kann die Kommunikationsschnittstelle A150 dazu eingerichtet sein, das Kommunikationssignal zu senden.

Die Reifendrucksensoranordnung 100 kann mindestens die Funktionseinheiten A131 bis A133 umfassen. Die Funktionseinheiten können hier und im Folgenden beispielsweise Softwaremodulen, Teilen eines Computerprogramms, Computerbefehlen, funktionalen elektronischen Schaltungen, mit der Reifendrucksensoranordnung 100 verbundenen funktionalen Komponenten und/oder Kombinationen hieraus entsprechen. Die Funktionseinheiten korrespondieren mit den jeweiligen Funktionen, wie sie im Flussdiagramm in Abbildung 9 dargestellt sind. Der Sender A133 kann beispielweise mit der Kommunikationsschnittstelle A150 gemeinsam das Senden des Kommunikationssignals bewirken.

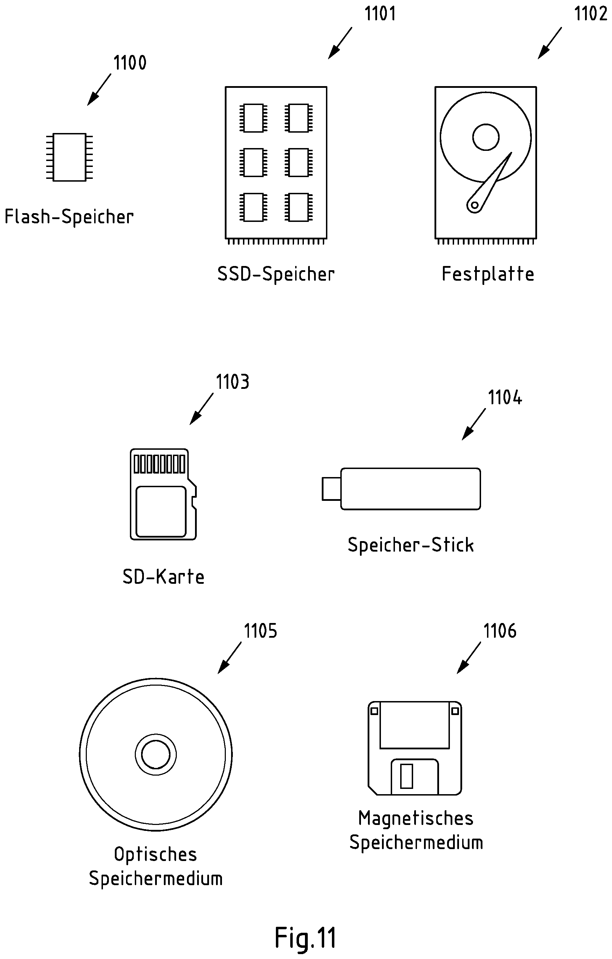

Fig. 12 ist eine schematische Darstellung von Beispielen von materiellen und nichtvergänglichen computerlesbaren Speichermedien gemäß der vorliegenden Erfindung, die beispielsweise zur Implementierung des Programm- und/oder Hauptspeichers A110, A120, A140 der Reifendrucksensoranordnung 100, wie in der Fig. 11 gezeigt, verwendet werden können. Fig. 12 zeigt einen Flash-Speicher 1200, der z.B. auf eine Leiterplatte gelötet oder gebondet sein kann, ein Solid-State-Laufwerk 1201 mit einer Vielzahl von Speicherchips (z.B. Flash-Speicherchips), eine magnetische Festplatte 1202, eine Secure Digital (SD)-Karte 1203, einen Universal Serial Bus (USB)-Speicherstick 1204, ein optisches Speichermedium 1205 (wie z.B. eine CD-ROM oder DVD) und ein magnetisches Speichermedium 1206.

Ferner sollen die folgenden Ausführungsbeispiele als explizit offenbart gelten.

Ausführungsbeispiel 1:
Verfahren zur Reifendrucküberwachung eines Fahrzeugs, insbesondere Nutzfahrzeugs, ausgeführt durch eine Reifendrucksensoranordnung, beispielsweise eine Reifendrucksensoranordnung nach dem zweiten Aspekt, umfassend
- Erfassen eines Innendrucks eines Reifens eines Rads,
- Bestimmen eines Sendezeitpunkts zum Senden eines Kommunikationssignals zumindest teilweise abhängig von einer Drehwinkelindikation, wobei das Kommunikationssignal eine Reifendruckindikation umfasst, wobei die Reifendruckindikation zumindest den erfassten Innendruck des Reifens repräsentiert, und wobei die Drehwinkelindikation zumindest eine Drehwinkelposition des Rades repräsentiert, und
- Senden des Kommunikationssignals zu dem bestimmten Sendezeitpunkt.

Ausführungsbeispiel 2:
Verfahren nach Ausführungsbeispiel 1, ferner umfassend
- Erfassen zumindest einer Beschleunigung eines Rades.

Ausführungsbeispiel 3:
Verfahren nach Ausführungsbeispiel 2,
- wobei mehrere Beschleunigungen in zumindest zwei oder drei verschiedenen Erfassungsachsen erfasst werden.

Ausführungsbeispiel 4:
Verfahren nach Ausführungsbeispiel 2 oder 3, wobei die Drehwinkelindikation auf der zumindest einen erfassten Beschleunigung basiert.

Ausführungsbeispiel 5:
Verfahren nach Ausführungsbeispiel 4,
- wobei die Drehwinkelindikation die zumindest eine erfasste Beschleunigung repräsentiert, und/oder
- wobei die Drehwinkelindikation eine, zumindest teilweise basierend auf der zumindest einen erfassten Beschleunigung abgeleitete Drehwinkelposition, repräsentiert.

Ausführungsbeispiel 6:
Verfahren nach einem der Ausführungsbeispiele 1 bis 5,
- wobei der Sendezeitpunkt mit einem Sendedrehwinkel und/oder einem Sendedrehwinkelbereich korrespondiert.

Ausführungsbeispiel 7:
Verfahren nach einem der Ausführungsbeispiele 1 bis 6,
   - wobei das Bestimmen des Sendezeitpunkts auf zumindest einem vordefinierten verbotenen Wertebereich der Drehwinkelposition und/oder der Drehwinkelindikation basiert.

Ausführungsbeispiel 8:
Verfahren nach einem der Ausführungsbeispiele 1 bis 7,
- wobei das Bestimmen des Sendezeitpunkts auf zumindest einem vordefinierten erlaubten Wertebereich der Drehwinkelposition und/oder der Drehwinkelindikation basiert.

Ausführungsbeispiel 9:
Verfahren nach Ausführungsbeispiel 7 oder 8,
- wobei der zumindest eine verbotene Wertebereich und/oder der zumindest eine erlaubte Wertebereich abhängig ist von einem Signalstärkeprofil.

Ausführungsbeispiel 10:
Verfahren nach Ausführungsbeispiel 9, wobei das Signalstärkeprofil
- einer, insbesondere vordefinierten, Verteilung einer Signalstärke über zumindest einen Teil der Drehwinkelpositionen entspricht, wobei die Signalstärke eine Stärke eines von der Reifendrucksensoranordnung übermittelten und von einem Empfänger, insbesondere einer Auswertungseinheit, empfangenen Signals entspricht und/oder
- abhängig von einer Radposition des Rads ist und/oder
- abhängig von der Drehwinkelposition ist und/oder
- empirisch bestimmt ist, insbesondere zumindest teilweise basierend auf der zumindest einen erfassten Beschleunigung und/oder auf einem Drehwinkelmesser, und/oder
- modellbasiert, insbesondere basierend auf einer Simulation, bestimmt ist und/oder
- auf einem physikalischen Übertragungskanal, insbesondere drahtlosen physikalischen Übertragungskanal, zwischen der Reifendrucksensoranordnung und dem Empfänger basiert.

Ausführungsbeispiel 11:
Verfahren nach einem der Ausführungsbeispiele 6 bis 10,
- wobei der zumindest eine verbotene Wertebereich und/oder der zumindest eine erlaubte Wertebereich und/oder der Sendedrehwinkel und/oder der Sendedrehwinkelbereich konstant ist und/oder variiert wird, insbesondere zufällig, zeitbasiert, um einen vordefinierten Änderungswert und/oder in einem vordefinierten Wertebereich, und/oder
- wobei der zumindest eine verbotene Wertebereich und/oder der zumindest eine erlaubte Wertebereich abhängig von einer Radposition des Rads ist.

Ausführungsbeispiel 12:
Verfahren nach einem der Ausführungsbeispiele 1 bis 11,
- wobei das Bestimmen des Sendezeitpunkts und/oder das Senden abhängig von einer Drehgeschwindigkeit des Rads ist.

Ausführungsbeispiel 13:
Verfahren nach einem der Ausführungsbeispiele 1 bis 12,
- wobei das Bestimmen des Sendezeitpunkts und/oder das Senden abhängig ist von einer Zeitinformation.

Ausführungsbeispiel 14:
Verfahren nach Ausführungsbeispiel 13, wobei die Zeitinformation
- abhängig von einer Drehgeschwindigkeit des Rads ist und/oder
- einer vordefinierten Verzögerungszeitspanne entspricht und/oder
- einem Sendeintervall entspricht.

Ausführungsbeispiel 15:
Verfahren nach einem der Ausführungsbeispiele 1 bis 14,
- wobei das Senden mit einer variablen Sendeleistung geschieht, und/oder
- wobei das Senden mit einer variablen Sendeleistung geschieht, wobei die Sendeleistung abhängig von einer Drehgeschwindigkeit des Rads ist.

Ausführungsbeispiel 16:
Verfahren nach einem der Ausführungsbeispiele 1 bis 15,
- wobei das Bestimmen des Sendezeitpunkts und/oder das Senden abhängig von einer Drehrichtung des Rads ist.

Ausführungsbeispiel 17:
Verfahren nach einem der Ausführungsbeispiele 1 bis 16, ferner umfassend
- Wiederholen des Sendens des Kommunikationssignals.

Ausführungsbeispiel 18:
Verfahren nach einem der Ausführungsbeispiele 1 bis 17,
- das Wiederholen abhängig ist von einer Drehgeschwindigkeit des Rads und/oder
- das Wiederholen abhängig ist von einer Zeitinformation und/oder
- das Senden an verschiedenen Werten der Drehwinkelindikation und/oder der Drehwinkelposition wiederholt wird, und/oder
- das Senden mit einer konstanten oder variablen Sendeleistung wiederholt wird.

Ausführungsbeispiel 19:
Verfahren nach einem der Ausführungsbeispiele 1 bis 18,
- das Senden des Kommunikationssignals über mehrere voneinander verschiedene Teilsendungen verteilt ist.

Ausführungsbeispiel 20:
Verfahren nach einem der Ausführungsbeispiele 1 bis 19, ferner umfassend
- Ableiten und/oder Bestimmen einer Drehwinkelposition des Rads, einer Drehrichtung des Rads und/oder einer Drehgeschwindigkeit des Rads aus der Drehwinkelindikation und/oder aus der zumindest einen erfassten Beschleunigung.

Ausführungsbeispiel 21:
Reifendrucksensoranordnung, beispielsweise eine Reifendrucksensoranordnung nach dem zweiten Aspekt, für Fahrzeuge, insbesondere Nutzfahrzeuge, umfassend einen Drucksensor und Mittel, die dazu eingerichtet sind, das Verfahren nach einem der Ausführungsbeispiele 1 bis 21 auszuführen und/oder zu steuern.

Ausführungsbeispiel 22:
Reifendrucksensoranordnung nach Ausführungsbeispiel 21,
- wobei der Drucksensor für das Erfassen des Innendrucks eines Reifens eines Rads eingerichtet ist, und/oder
- umfassend ein Bestimmungsmittel, wobei das Bestimmungsmittel für das Bestimmen des Sendezeitpunkts eingerichtet ist, und/oder
- umfassend ein Kommunikationsmittel, wobei das Kommunikationsmittel für das Senden des Kommunikationssignals eingerichtet ist.

Ausführungsbeispiel 23:
Reifendrucksensoranordnung nach Ausführungsbeispiele 21 oder 22, ferner umfassend
- einen Beschleunigungssensor, wobei der Beschleunigungssensor dazu eingerichtet ist, die zumindest eine Beschleunigung zu erfassen.

Ausführungsbeispiel 24:
Reifendrucksensoranordnung nach einem der Ausführungsbeispiel 21 bis 23, ferner umfassend
- ein Ableitungs- und/oder Bestimmungsmittel, wobei das Ableitungs- und/oder Bestimmungsmittel für die Ableitung der Drehwinkelposition, Drehrichtung und/oder Drehgeschwindigkeit eingerichtet ist.

Ausführungsbeispiel 25:
Eine Vorrichtung, z.B. die Reifendrucksensoranordnung nach dem zweiten Aspekt, mit mindestens einem Prozessor; und mindestens einem Speicher, der Anweisungen enthält, die, wenn sie von dem mindestens einen Prozessor ausgeführt werden, die Vorrichtung veranlassen, zumindest das Verfahren gemäß einem der Ausführungsbeispiele 1 bis 20 durchzuführen und/oder zu steuern.

Ausführungsbeispiel 26:
Ein Computerprogramm, wobei das Computerprogramm, wenn es von einem Prozessor ausgeführt wird, eine Vorrichtung, z.B. die Vorrichtung gemäß dem zweiten Aspekt, veranlasst, die Aktionen und/oder Schritte des Verfahrens gemäß einem der Ausführungsbeispiele 1 bis 20 durchzuführen und/oder zu steuern.

Ausführungsbeispiel 27:
Ein Computerprogrammprodukt, das ein Computerprogramm gemäß Ausführungsbeispiel 26 umfasst.

Ausführungsbeispiel 25:
Rad für Fahrzeuge, insbesondere Nutzfahrzeuge, umfassend eine Vorrichtung, insbesondere eine Reifendrucksensoranordnung, nach einem der Ausführungsbeispiele 21 bis 25.

Ausführungsbeispiel 26:
Fahrzeug, insbesondere Nutzfahrzeug, umfassend ein Rad nach Ausführungsbeispiel 25.

Ausführungsbeispiel 27:
Fahrzeug gemäß Ausführungsbeispiel 26,
- wobei das Fahrzeug ein Anhänger ist und/oder
- wobei das Fahrzeug zumindest sechs Radpositionen umfasst.

In der vorliegenden Offenbarung ist jede in den beschriebenen Ausführungsformen dargestellte Verbindung so zu verstehen, dass die beteiligten Komponenten funktionell gekoppelt sind. Daher können die Verbindungen direkt oder indirekt sein, mit einer beliebigen Anzahl oder Kombination von dazwischenliegenden Elementen, und es kann lediglich eine funktionelle Beziehung zwischen den Komponenten bestehen.

Darüber hinaus können alle hierin beschriebenen oder dargestellten Verfahren, Prozesse und Aktionen unter Verwendung von ausführbaren Anweisungen in einem Mehrzweck- oder Spezialprozessor implementiert und auf einem computerlesbaren Speichermedium (z. B. Festplatte, Speicher oder dergleichen) gespeichert werden, um von einem solchen Prozessor ausgeführt zu werden. Verweise auf ein "computerlesbares Speichermedium" sollten so verstanden werden, dass sie auch spezialisierte Schaltungen wie FPGAs, ASICs, Signalverarbeitungsgeräte und andere Geräte umfassen.

Der Ausdruck "A und/oder B" umfasst eines der folgenden drei Szenarien: (i) A, (ii) B, (iii) A und B. Der Ausdruck "A und/oder B" hat die gleiche Bedeutung wie der Ausdruck "A oder B", und der Ausdruck "mindestens eines von A oder B" kann hier verwendet werden. Außerdem ist der Artikel "ein" nicht als "ein" (einziges) zu verstehen, d. h. die Verwendung des Ausdrucks "ein Element" schließt nicht aus, dass auch weitere Elemente vorhanden sind. Der Begriff "umfassend" ist in einem offenen Sinne zu verstehen, d.h. dass ein Gegenstand, der "ein Element A" umfasst, neben dem Element A auch weitere Elemente umfassen kann.

Es versteht sich, dass alle vorgestellten Ausführungsbeispiele (z.B. nur) beispielhaft sind, und dass jedes Merkmal, das für ein bestimmtes Ausführungsbeispiel vorgestellt wird, mit jedem beliebigen Aspekt allein oder in Kombination mit einem beliebigen Merkmal, das für dasselbe oder ein anderes bestimmtes Ausführungsbeispiel vorgestellt wird, und/oder in Kombination mit einem beliebigen anderen, nicht erwähnten Merkmal verwendet werden kann. Insbesondere sind die in dieser Beschreibung dargestellten Ausführungsbeispiele so zu verstehen, dass sie auch in allen möglichen Kombinationen miteinander offenbart werden, soweit dies technisch sinnvoll ist und die Ausführungsbeispiele keine Alternativen zueinander darstellen. Es versteht sich ferner, dass jedes Merkmal, das für ein Ausführungsbeispiel in einer bestimmten Kategorie (Verfahren/Gerät/Computerprogramm/System) dargestellt wird, auch in entsprechender Weise in einem Ausführungsbeispiel einer beliebigen anderen Kategorie verwendet werden kann. Es sollte auch verstanden werden, dass das Vorhandensein eines Merkmals in den vorgestellten Ausführungsbeispielen nicht unbedingt bedeutet, dass dieses Merkmal ein wesentliches Merkmal darstellt und nicht weggelassen oder ersetzt werden kann.

Die Angabe, dass ein Merkmal mindestens eines der nachfolgend aufgezählten Merkmale umfasst, ist nicht zwingend in der Weise, dass das Merkmal alle nachfolgend aufgezählten Merkmale oder mindestens ein Merkmal aus der Vielzahl der nachfolgend aufgezählten Merkmale umfasst. Auch eine Auswahl der aufgezählten Merkmale in beliebiger Kombination oder eine Auswahl von (z.B. nur) einem der aufgezählten Merkmale ist möglich. Auch die spezifische Kombination aller nachfolgend aufgezählten Merkmale kann in Betracht gezogen werden. Auch eine Vielzahl von (z.B. nur) einem der aufgezählten Merkmale kann möglich sein.

Die oben dargestellte Abfolge aller Verfahrensschritte ist nicht zwingend, auch alternative Abfolgen sind denkbar. Dennoch ist die in den Figuren beispielhaft dargestellte konkrete Abfolge von Verfahrensschritten als eine mögliche Abfolge von Verfahrensschritten für die jeweilige Ausführungsform, die durch die jeweilige Figur beschrieben wird, anzusehen.

Der Gegenstand ist oben anhand von Ausführungsbeispielen beschrieben worden. Es wird darauf hingewiesen, dass es alternative Wege und Variationen gibt, die für den Fachmann naheliegend sind und umgesetzt werden können, ohne vom Anwendungsbereich der beigefügten Ansprüche abzuweichen.

## Patentansprüche

1. Verfahren zur Reifendrucküberwachung eines Fahrzeugs, insbesondere Nutzfahrzeugs, ausgeführt durch eine Reifendrucksensoranordnung, umfassend
- Erfassen eines Innendrucks eines Reifens eines Rads,
- Bestimmen eines Sendezeitpunkts zum Senden eines Kommunikationssignals zumindest teilweise abhängig von einer Drehwinkelindikation, wobei das Kommunikationssignal eine Reifendruckindikation umfasst, wobei die Reifendruckindikation zumindest den erfassten Innendruck des Reifens repräsentiert, und wobei die Drehwinkelindikation zumindest eine Drehwinkelposition des Rades repräsentiert, und
- Senden des Kommunikationssignals zu dem bestimmten Sendezeitpunkt.

2. Verfahren nach Anspruch 1, ferner umfassend
- Erfassen zumindest einer Beschleunigung eines Rades und/oder
- Erfassen zumindest einer Beschleunigung eines Rades, wobei mehrere Beschleunigungen in zumindest zwei oder drei verschiedenen Erfassungsachsen erfasst werden.

3. Verfahren nach Anspruch 2,
- wobei die Drehwinkelindikation auf der zumindest einen erfassten Beschleunigung basiert und/oder
- wobei die Drehwinkelindikation die zumindest eine erfasste Beschleunigung repräsentiert, und/oder
- wobei die Drehwinkelindikation eine zumindest teilweise basierend auf der zumindest einen erfassten Beschleunigung abgeleitete Drehwinkelposition repräsentiert.

4. Verfahren nach einem der Ansprüche 1 bis 3,
- wobei das Bestimmen des Sendezeitpunkts auf zumindest einem vordefinierten verbotenen Wertebereich der Drehwinkelposition und/oder der Drehwinkelindikation basiert.

5. Verfahren nach einem der Ansprüche 1 bis 4,
- wobei das Bestimmen des Sendezeitpunkts auf zumindest einem vordefinierten erlaubten Wertebereich der Drehwinkelposition und/oder der Drehwinkelindikation basiert.

6. Verfahren nach Anspruch 4 oder 5,
- wobei der zumindest eine verbotene Wertebereich und/oder der zumindest eine erlaubte Wertebereich abhängig ist von einem Signalstärkeprofil und/oder
- wobei der zumindest eine verbotene Wertebereich und/oder der zumindest eine erlaubte Wertebereich abhängig ist von einem Signalstärkeprofil wobei das Signalstärkeprofil
- einer, insbesondere vordefinierten, Verteilung einer Signalstärke über zumindest einen Teil der Drehwinkelpositionen entspricht, wobei die Signalstärke eine Stärke eines von der Reifendrucksensoranordnung übermittelten und von einem Empfänger, insbesondere einer Auswertungseinheit, empfangenen Signals entspricht und/oder
- abhängig von einer Radposition des Rads ist und/oder
- abhängig von der Drehwinkelposition ist und/oder
- empirisch bestimmt ist, insbesondere zumindest teilweise basierend auf der zumindest einen erfassten Beschleunigung und/oder auf einem Drehwinkelmesser, und/oder
- modellbasiert, insbesondere basierend auf einer Simulation, bestimmt ist und/oder
- auf einem physikalischen Übertragungskanal, insbesondere drahtlosen physikalischen Übertragungskanal, zwischen der Reifendrucksensoranordnung und dem Empfänger basiert.

7. Verfahren nach einem der Ansprüche 4 bis 6,
- wobei der zumindest eine verbotene Wertebereich und/oder der zumindest eine erlaubte Wertebereich und/oder der Sendedrehwinkel und/oder der Sendedrehwinkelbereich konstant ist und/oder variiert wird, insbesondere zufällig, zeitbasiert, um einen vordefinierten Änderungswert und/oder in einem vordefinierten Wertebereich, und/oder
- wobei der zumindest eine verbotene Wertebereich und/oder der zumindest eine erlaubte Wertebereich abhängig von einer Radposition des Rads ist.

8. Verfahren nach einem der Ansprüche 1 bis 7,
- wobei das Bestimmen des Sendezeitpunkts und/oder das Senden abhängig von einer Drehgeschwindigkeit des Rads ist und/oder
- wobei das Bestimmen des Sendezeitpunkts und/oder das Senden abhängig ist von einer Zeitinformation und/oder
- wobei das Bestimmen des Sendezeitpunkts und/oder das Senden abhängig ist von einer Zeitinformation, wobei die Zeitinformation
- abhängig von einer Drehgeschwindigkeit des Rads ist und/oder
- einer vordefinierten Verzögerungszeitspanne entspricht und/oder
- einem Sendeintervall entspricht.

9. Verfahren nach einem der Ansprüche 1 bis 8,
- wobei das Senden mit einer variablen Sendeleistung geschieht, und/oder
- wobei das Senden mit einer variablen Sendeleistung geschieht, wobei die Sendeleistung abhängig von einer Drehgeschwindigkeit des Rads ist und/oder
- wobei das Bestimmen des Sendezeitpunkts und/oder das Senden abhängig von einer Drehrichtung des Rads ist.

10. Verfahren nach einem der Ansprüche 1 bis 9, ferner umfassend
- Wiederholen des Sendens des Kommunikationssignals und/oder
- Wiederholen des Sendens des Kommunikationssignals, wobei
- das Wiederholen abhängig ist von einer Drehgeschwindigkeit des Rads und/oder
- das Wiederholen abhängig ist von einer Zeitinformation und/oder
- das Senden an verschiedenen Werten der Drehwinkelindikation und/oder der Drehwinkelposition wiederholt wird, und/oder
- das Senden mit einer konstanten oder variablen Sendeleistung wiederholt wird.

11. Verfahren nach einem der Ansprüche 1 bis 10,
- das Senden des Kommunikationssignals über mehrere voneinander verschiedene Teilsendungen verteilt ist.

12. Verfahren nach einem der Ansprüche 1 bis 11, ferner umfassend
- Ableiten und/oder Bestimmen einer Drehwinkelposition des Rads, einer Drehrichtung des Rads und/oder einer Drehgeschwindigkeit des Rads aus der Drehwinkelindikation und/oder aus der zumindest einen erfassten Beschleunigung.

13. Reifendrucksensoranordnung für Fahrzeuge, insbesondere Nutzfahrzeuge, umfassend einen Drucksensor und Mittel, die dazu eingerichtet sind, das Verfahren nach einem der Ansprüche 1 bis 12 auszuführen und/oder zu steuern.

14. Rad für Fahrzeuge, insbesondere Nutzfahrzeuge, umfassend eine Reifendrucksensoranordnung nach Anspruche 13.

15. Fahrzeug, insbesondere Nutzfahrzeug, umfassend ein Rad nach Anspruch 14.
